# EUROPEAN PATENT SPECIFICATION

(11) **EP 3 259 765 B1**
(45) Date of publication and mention of the grant of the patent: **25.09.2019**
(21) Application number: 16706404.7
(22) Date of filing: 17.02.2016
(51) Int. Cl.: H01B 7/288, H01B 7/282, H01B 7/285, H01B 7/32, H01B 7/18, H01B 3/28

(54) **SELF-REPAIRING CABLE**
SELBSTREPARIERENDES KABEL
CÂBLE AUTO-RÉPARANT

(30) Priority: 18.02.2015 GB 201502702
(43) Date of publication of application: 27.12.2017
(73) Proprietor: Gnosys Global Limited, Guildford, Surrey GU2 7YD (GB)
(72) Inventor: STEVENS, Gary, Guildford Surrey GU2 7YD (GB); RHODES, Rhys, Guildford Surrey GU2 7YD (GB)
(74) Representative: Hutter, Anton
(86) International application number: PCT/GB2016/050397
(87) International publication number: WO 2016/132127

(56) References cited:
- EP-B1- 1 042 763
- GB-A- 1 194 634
- US-A1- 2012 277 378

## Description

The present invention relates to self-repairing cables, their uses and to methods of manufacturing such cables.

Globally there is a recognised need in energy distribution networks for extruded polymeric cables to be capable of self-repair. At present cables which are not capable of such self-repair often develop small defects in their protective outer sheath during manufacture and installation. These defects are often minor and are difficult to readily detect but, over time, minor defects may develop into major defects permitting water and oxygen to penetrate the cable, causing degradation that can eventually lead to cable failure. Additionally, cables will often sustain more significant damage during operation from civil engineering works for on-shore cables in their immediate environment. This damage can be caused either indirectly, such as through vibrations (i.e. drilling), or directly, such as through mishaps involving earth-moving equipment and hand operations.

Similar problems are encountered where cables are used in undersea applications. For instance, cables can be damaged due to being impacted by anchors or the nets of fishing trawlers. If the protective outer sheath is breached, sea-water can quickly penetrate the cable, which can result in cable failure.

Once installed, power cables are often physically inaccessible, for instance they may be located underground or on the sea floor. For this reason the development of defects will likely go unnoticed until failure occurs. Incorporating a self-repair system into cables will prevent minor defects developing into major defects and thereby causing the eventual failure of the cable. This will extend the operational lifetime of the cable, and reduce the costs incurred due to cable outage and the need to replace failed cables.

Current power cables may use a water blocking tape and/or free powders at different locations in the cable to prevent water migration radially and longitudinally in the cable. The tape comprises a hydrophilic material which can easily absorb its own weight in water causing the tape to swell and fill a defect. However, there are a number of problems associated with using water blocking tapes. During manufacture, the tape has to be wrapped around the inner section of a cable before a waterproof external layer is applied. This wrapping process increases the time and cost involved in manufacturing cables.

Additionally, the inventors of the present invention have found that water blocking tape possesses poor structural integrity, when a sufficient quantity of water is absorbed the hydrophilic material dissolves to form a gel that can diffuse through the outer sheath of the tape into the local environment. For this reason the protective capabilities of the tape are short-lived, particularly in wet or submarine environments.

A number of other parties have identified the need to develop a self-repairing cable and various solutions have been suggested. For instance, US8119238 defines a self-repairing system comprising a material incorporating a plurality of microcapsules containing reactants. When the microcapsules are caused to rupture due to a defect in the system, the reactants polymerize, thereby repairing the defect. While this system would repair an initial defect, once the microcapsules in a given location have ruptured then that location would not be capable of further self repair. Additionally, it would be difficult to manufacture a material comprising the necessary microcapsules.

US6534715 discloses a cable which includes a layer comprising a material with a predetermined cohesiveness and flowability. It is claimed that such a system would allow the material to "move" into a defect, thereby repairing it. Similarly, US8101862 discloses a cable which includes a layer comprising a material capable of flowing into a defect. However, due to the flowability, the material would eventually leak from any defects over time. For this reason, this solution can only ever been seen as a temporary fix.

US 2012/277378 A1 discloses electrical insulation comprising a polymeric matrix having compounded therein a functionalised dielectric nanoparticle filler comprising a self-healing moiety, dispersible in the polymeric matrix, wherein the electrical insulation is capable of self-healing upon exposure to corona discharge.

EP 1042763 B1 discloses an electrical cable comprising a semiconductive water-blocking expanded layer.

GB 1194634 A discloses a multiconductor cable which is moisture resistance.

There is a need to provide alternative and improved self-repairing cables.

In accordance with a first aspect, there is provided a self-repairing cable comprising a core surrounded by a solid self-healing layer comprising a water-swelling material, characterised in that the water-swelling material comprises:
- a water-swelling thermoplastic elastomer (TPE) comprising poly(styrene-block-butadiene-block-styrene), poly(styrene-block-ethene-co-butane-block-styrene) or poly(styrene-block-ethylene-co-butylene-block-styrene), and a hydrophilic additive; or
- a water-swelling rubber.

The term "self-repairing cable" can mean that at least a portion of the cable is capable of repairing itself after it has been damaged without the need for input from a user. The term "self-healing layer" can mean that the layer comprises a material capable of itself closing a defect which has formed therein without the need for input from a user and without the material, which forms the self-healing layer, undergoing an irreversible chemical reaction. The term "defect" can mean a mechanical defect such as a crack or a void.

Advantageously, since the materials which form the self-healing layer do not undergo any irreversible chemical reactions, the self-healing layer is capable of self-healing multiple times, and is therefore able to protect the core of the cable from repeated damage inflicted on the cable. This prevents major defects from forming in the cable, which would otherwise eventually penetrate to the core and ultimately result in the failure of the cable.

Preferably, the core is configured to transmit electricity, data and/or light.

Preferably, the self-healing layer is extruded around the core, preferably as a discrete layer.

In one embodiment, the self-healing layer may comprise a dry self-healing layer, wherein no part of the dry self-healing layer is exposed to water during normal use of an undamaged cable.

In another embodiment, the self-healing layer may comprise a wet self-healing layer, wherein the wet self-healing layer comprises an outer surface, at least a portion of which is exposed to water during normal use of an undamaged cable.

The dry self-healing layer may further comprise a supramolecular matrix and/or a shape memory polymer (SMP).

In one embodiment, the dry self-healing layer comprises a supramolecular matrix incorporating a plurality of particles therein, wherein the particles comprise a water swelling material. In a preferred embodiment, however, the dry self-healing layer comprises first and second sub-layers, wherein the first sub-layer comprises a water swelling material and the second sub layer comprises a supramolecular matrix. Preferably, the first sub-layer is closer to the core than the second sub-layer, and the first sub-layer is surrounded by the second sub layer.

The wet self-healing layer may further comprise a supramolecular matrix and/or a shape memory polymer (SMP).

In a preferred embodiment, the wet self-healing layer comprises first and second sub-layers, wherein the first sub-layer comprises a water swelling material and the second sub-layer comprises a supramolecular matrix. Preferably, the first sub-layer is closer to the core than a second sub-layer, and the first sub-layer is surrounded by the second sub-layer.

The hydrophilic additive may comprise one or more hydrophilic side chains grafted onto the polymer. The one or more hydrophilic side chains may be grafted to the polymer by covalent bonds. Preferably, the hydrophilic side chain comprises poly(acrylic acid), maleic acid or sodium polyacrylate. Alternatively or additionally, the hydrophilic additive may comprise a second polymer, wherein the second polymer is a water swellable polymer which is not chemically bonded to the first polymer. The second polymer may comprise poly(acrylic acid) or sodium poly(acrylic acid).

The water swelling rubber may comprise a rubber matrix and a hydrophilic additive. The rubber matrix may comprise a natural rubber. The hydrophilic additive may comprise one or more hydrophilic side chain grafted onto the rubber. The hydrophilic additive and/or hydrophilic side chain may comprise poly(acrylic acid), maleic acid or sodium polyacrylate.

The supramolecular matrix may comprise molecules capable of forming labile bonds, for example at least one of hydrogen bonds, π-stacking, or ionic bonds. Preferred molecules may comprise a polyolefin (such as polyethylene (PE), polypropropylene (PP), an ethylene copolymer, an olefin polymer blend), a polyimide, a polyamide, a polyester (such as polyethylene terephthalate (PET) or polybutylene terephthalate (PBT)) or a thermoplastic elastomer (such as poly(styrene-block-butadiene-block-styrene) (SBS) or a poly(styrene-block-ethylene-co-butylene-block-styrene) (SEBS)) containing a self-healing matrix. The self-healing matrix may comprise one or more groups capable of forming labile bonds grafted to the thermoplastic elastomer. Alternatively, the self-healing matrix may comprise a further polymer which is not grafted to the thermoplastic elastomer and is capable of forming labile bonds. Alternatively, the molecule may comprise an ionomeric polymer. The supramolecular matrix may comprise a supramolecular polymer, a supramolecular thermoplastic elastomer or a supramolecular hydrophilic thermoplastic elastomer. The supramolecular polymer, the supramolecular thermoplastic elastomer and/or the supramolecular hydrophilic thermoplastic elastomer may all be either melt or solution processable.

Advantageously, a supramolecular matrix which has self-healed after being damaged will be mechanically similar and in some cases identical to a similar matrix which has not been damaged.

The shape memory polymer (SMP) may comprise a polymeric smart material programmed into the desired shape, wherein if the SMP is deformed then the original shape may be recovered once the shape memory polymer is exposed to a trigger. The trigger may comprise a specific temperature or temperature range, an electrical field, light and/or water. Preferably, the shape memory polymer comprises a thermoplastic polyurethane. Preferably, the shape memory polymer comprises a covalently cross-linked glassy thermoset, such as polynorbornene functionalized with poly-caprolactone and cyano group. Preferably, the shape memory polymer comprises a covalently cross-linked semi-crystalline network, such as a polymer network containing poly(octadecyl vinyl ether)-co-BA. Preferably, the shape memory polymer comprises a physically cross-linked glassy copolymer, such as ethylene oxide-ethylene terephthalate segmented copolymer. Preferably, the shape memory polymer comprises a physically cross-linked semi-crystalline block copolymer, such as polyurethane block copolymers with shape memory effect.

In one embodiment of the present invention the self-healing layer comprises a water-blocking layer, wherein the water-blocking layer is configured to prevent water from passing therethrough. In addition to comprising a water swelling thermoplastic elastomer (TPE) and/or a water swelling rubber, the water-blocking layer may further comprise a shape memory polymer. In a preferred embodiment, the water-blocking layer comprises a water swelling thermoplastic elastomer (TPE).

Advantageously, a self-healing layer comprising a water-blocking layer would be capable of self repair, thereby preventing any defects from propagating in the cable, and would also prevent water from penetrating past the self-healing layer when no defects are present.

The cable may comprise an electrical power cable. Alternatively, the cable may comprise a power transmission or distribution line, a coaxial single core cable or a triple or multi-core cable. The cable may comprise a data communications cable or an optical fibre cable where there is a need to repair damage to the outer sheath and prevent water from entering the cable and being transported within the cable.

In the embodiment where the cable comprises an electric power cable the core may comprise an electrically conductive material, preferably copper or aluminium.

In the embodiment where the cable comprises a data cable the core may comprise a plurality of fibres wherein each fibre comprises copper, aluminium or an optical fibre. Each fibre may comprise an insulating coating or sheath which surrounds the copper, aluminium or optical fibre.

Preferably, the cable comprises an insulating layer. Preferably, the insulating layer is configured to electrically insulate the core. Preferably, the insulating layer is extruded around the core. Preferably, the insulating layer comprises an electrically insulating polymeric or rubber material. Preferably, the insulating layer comprises a cross-linked polyethylene, a polyethylene blend or a polypropylene blend. In a preferred embodiment the insulating layer comprises a cross-linked polyethylene. Accordingly, it is preferred that the cable comprises a conductive core, an insulating layer which surrounds the conductive core, and a first self-healing layer which surrounds the insulating layer.

The cable may comprise one or more semi-conductive layers which comprise a semi-conductive material. Preferably, the or each semi-conductive layer is extruded around the core. For example, the cable may comprise an inner semi-conductive layer and an outer semi-conductive layer. Preferably, the inner semi-conductive layer is disposed adjacent to and surrounds the core and is disposed adjacent to and is itself surrounded by the insulating layer. The outer semi-conductive layer preferably is disposed adjacent to and surrounds the insulating layer and is surrounded by the first self-healing layer. The semi-conductive layer may comprise a carbon-loaded polyethylene, an ethylene copolymer (such as ethylene vinyl acetate (EVA) and ethylene butyl acrylate (EBA)) or a carbon loaded blend thereof or a carbon loaded blend of polyethylenes or polypropylenes. Alternatively or additionally, the semi-conductive layer may comprise a carbon loaded thermoplastic elastomer (TPE) and/or a carbon loaded supramolecular matrix which may be positioned adjacent to the semi-conductive layer in contact with the insulating layer. In a preferred embodiment the outer semi-conductive layer is disposed adjacent to the first self-healing layer.

Preferably, the first self-healing layer is semi-conductive. Accordingly, the first self-healing layer may comprise a water swelling thermoplastic elastomer (TPE) compounded with a conductive material (such as fumed carbon, colloidal carbon, graphite or graphene). The first self-healing layer may comprise a water swelling thermoplastic elastomer (TPE) comprising between 3 and 6% carbon.

Advantageously, this will allow the first self-healing layer to form stronger bonds with the outer semi-conductive layer.

Accordingly, it is preferred that the cable comprises a conductive core which is disposed adjacent to and surrounded by a first semi-conductive layer, an insulating layer which is disposed adjacent to and surrounds the first semi-conductive layer, a second semi-conductive layer which is disposed adjacent to and surrounds the insulating layer, and a first self-healing layer which is disposed adjacent to and surrounds the second semi-conductive layer.

The cable may comprise a sheath which is configured to not allow water to pass therethrough. Preferably, the sheath surrounds the insulating layer. Preferably, the sheath is extruded around the core, and preferably around the insulating layer in embodiments where one is present. In one embodiment, the sheath also surrounds the first self-healing layer and is preferably disposed adjacent to the first self healing layer, and preferably the first self-healing layer comprises a dry self-healing layer. In an alternative embodiment, suitable for wet cable designs, the sheath is itself surrounded by the first self-healing layer, and preferably the first self-healing layer comprises a wet self-healing layer. Preferably, the sheath comprises medium or high density polyethylene (MDPE or HDPE), polypropylene (PP) and/or poly(oxymethylene). Optionally, the sheath comprises inner and outer sheath layers, wherein the inner sheath layer is disposed adjacent to and surrounded by the outer sheath. The outer sheath may comprise medium or high density polyethylene (MDPE or HDPE), polypropylene (PP) and/or poly(oxymethylene) and the inner sheath may comprise lead, copper or aluminium. The lead, copper or aluminium which comprises the inner sheath may be provided in the form of a bonded tape, optionally an edge bonded wrap forming a continuous water barrier.

Accordingly, in another preferred embodiment the cable comprises a conductive core which is disposed adjacent to and is surrounded by a first semi-conductive layer, an insulating layer which is disposed adjacent to and surrounds the first semi-conductive layer, a second semi-conductive layer which is disposed adjacent to and surrounds the insulating layer, a sheath which is disposed adjacent to and surrounds the second semi-conductive layer and a first self-healing layer which surrounds the sheath. In an alternative embodiment, the cable comprises a conductive core which is disposed adjacent to and is surrounded by a first semi-conductive layer, an insulating layer which is disposed adjacent to and surrounds the first semi-conductive layer, a second semi-conductive layer which is disposed adjacent to and surrounds the insulating layer, a first self-healing layer which is disposed adjacent to and surrounds the second semi-conductive layer and a sheath which is disposed adjacent to and surrounds the self-healing layer.

The cable may comprise an additional layer which comprises a plurality of wires. For example, the wires may comprise steel wires, which may be filled with bitumen. Preferably, the additional layer surrounds the first self-healing layer. Additionally, the additional layer preferably surrounds the sheath, in embodiments where one is present.

Advantageously, the additional layer provides a layer of armour to further protect the core of the cable.

Optionally, the cable comprises a bedding layer, which is configured to hold the additional layer in place. The bedding layer may comprise polyvinyl chloride (PVC), an ethylene copolymer (such as ethylene vinyl acetate (EVA) and ethylene butyl acrylate (EBA)), a thermoplastic polyester (such as polybutylene terephthalate (PBT) or polyethylene terephthalate (PET)) and/or a thermoplastic elastomers (TPE). In one preferred embodiment, the bedding layer comprises a self-healing layer comprising water swelling thermoplastic elastomers. Preferably, the bedding is surrounded by and disposed adjacent to the additional layer. Additionally, the bedding layer may be disposed adjacent to and surround the sheath, in embodiments where one is present. Preferably, the bedding layer is extruded around the core, and the sheath in embodiments where one is present.

Accordingly, in yet another preferred embodiment the cable comprises a conductive core which is disposed adjacent to and surrounded by a first semi-conductive layer, an insulating layer which is disposed adjacent to and surrounds the first semi-conductive layer, a second semi-conductive layer which is disposed adjacent to and surrounds the insulating layer, a sheath which is disposed adjacent to and surrounds the second semi-conductive layer, a bedding layer which is disposed adjacent to and surrounds the sheath, an additional layer which is disposed adjacent to and surrounds the bedding layer and a first self-healing layer which is disposed adjacent to and surrounds the additional layer. In yet an alternative embodiment, the cable comprises a conductive core which is disposed adjacent to and surrounded by a first semi-conductive layer, an insulating layer which is disposed adjacent to and surrounds the first semi-conductive layer, a second semi-conductive layer which is disposed adjacent to and surrounds the insulating layer, a first self-healing layer which is disposed adjacent to and surrounds the second semi-conductive layer, a sheath which is disposed adjacent to and surrounds the first self-healing layer, a bedding layer which is disposed adjacent to and surrounds the sheath and an additional layer which is disposed adjacent to and surrounds the bedding layer.

The cable may comprise an external jacket layer. The jacket layer preferably comprises a water permeable yarn cladding, and the yarn preferably comprises polypropylene. The jacket layer preferably surrounds all of the other layers. Accordingly, the jacket layer may be disposed adjacent to and surround the additional layer, in embodiments where one is present. Alternatively, the jacket layer may be disposed adjacent to and surround the first self-healing layer.

Accordingly, in yet another preferred embodiment the cable comprises a conductive core which is disposed adjacent to and surrounded by a first semi-conductive layer, an insulating layer which is disposed adjacent to and surrounds the first semi-conductive layer, a second semi-conductive layer which is disposed adjacent to and surrounds the insulating layer, a sheath which is disposed adjacent to and surrounds the second semi-conductive layer, a bedding layer which is disposed adjacent to and surrounds the sheath, an additional layer which is disposed adjacent to and surrounds the bedding layer, a first self-healing layer which is disposed adjacent to and surrounds the additional layer and an external jacket layer which is disposed adjacent to and surrounds the first self-healing layer. In an alternative embodiment, the cable comprises a conductive core which is disposed adjacent to and surrounded by a first semi-conductive layer, an insulating layer which is disposed adjacent to and surrounds the first semi-conductive layer, a second semi-conductive layer which is disposed adjacent to and surrounds the insulating layer, a first self-healing layer which is disposed adjacent to and surrounds the second semi-conductive layer, a sheath which is disposed adjacent to and surrounds the first self-healing layer, a bedding layer which is disposed adjacent to and surrounds sheath, an additional layer which is disposed adjacent to and surrounds the bedding layer and an external jacket layer which is disposed adjacent to and surrounds the additional layer.

Optionally, the single core electrical cable comprises a second self-healing layer. Preferably, the second self-healing layer is extruded around the core. Preferably, the second self-healing layer comprises a wet self-healing layer. Optionally, the second self-healing layer surrounds the sheath, in embodiments where one is present. Optionally, the second self-healing layer is disposed adjacent to and surrounds the additional layer, in embodiments where one is present. Optionally, and the second self-healing layer is disposed adjacent to and surrounded by the external jacket layer, in embodiments where one is present.

Accordingly, in a most preferred embodiment, the single core electrical cable comprises a conductive core which is disposed adjacent to and surrounded by a first semi-conductive layer, an insulating layer which is disposed adjacent to and surrounds the first semi-conductive layer, a second semi-conductive layer which is disposed adjacent to and surrounds the insulating layer, a first self-healing layer which is disposed adjacent to and surrounds the second semi-conductive layer, a sheath which is disposed adjacent to and surrounds the first self-healing layer, a bedding layer which is disposed adjacent to and surrounds the sheath, an additional layer which is disposed adjacent to and surrounds the bedding layer, a second self-healing layer which is disposed adjacent to and surrounds the additional layer, and an external jacket layer which is disposed adjacent to and surrounds the second self-healing layer.

Alternatively, the second self-healing layer may surround the sheath and be itself surrounded by the bedding layer, in embodiments where these are present. Preferably, the second self-healing layer comprises a wet self-healing layer.

Accordingly, in an alternative preferred embodiment, the single core electrical cable comprises a conductive core which is disposed adjacent to and surrounded by a first semi-conductive layer, an insulating layer which is disposed adjacent to and surrounds the first semi-conductive layer, a second semi-conductive layer which is disposed adjacent to and surrounds the insulating layer, a first self-healing layer which is disposed adjacent to and surrounds the second semi-conductive layer, a sheath which is disposed adjacent to and surrounds the first self-healing layer, a second self-healing layer which is disposed adjacent to and surrounds the sheath, a bedding layer which is disposed adjacent to and surrounds the second self-healing layer, an additional layer which is disposed adjacent to and surrounds the bedding layer, and an external jacket layer which is disposed adjacent to and surrounds the additional layer.

Optionally, the single core electrical cable may comprise a metallic screen configured to provide a conducting earth plane or a reference voltage plane to support electrical measurements of the cable and/or an electrical fault current protection function. Preferably, the metallic screen is disposed around the core. The metallic screen may comprise a copper counter helix braid layer and/or a copper counter screen. Preferably, the metallic screen comprises a copper counter helix braid layer which is disposed adjacent to and surrounded by a copper counter screen. The metallic screen may surround the insulating layer, and/or the second semi-conductive layer, in embodiments where one is present. The metallic screen may be surrounded by the sheath, in embodiments where one is present. The metallic screen may be surrounded by the first self-healing layer. However, in a preferred embodiment the first self-healing layer is surrounded by the metallic screen.

Accordingly, in a preferred embodiment, the single core electrical cable comprises a conductive core which is disposed adjacent to and surrounded by a first semi-conductive layer, an insulating layer which is disposed adjacent to and surrounds the first semi-conductive layer, a second semi-conductive layer which is disposed adjacent to and surrounds the insulating layer, a first self-healing layer which is disposed adjacent to and surrounds the second semi-conductive layer, a metallic screen which is disposed adjacent to and surrounds the first self-healing layer, a sheath which is disposed adjacent to and surrounds the metallic screen, a bedding layer which is disposed adjacent to and surrounds the sheath, an additional layer which is disposed adjacent to and surrounds the bedding layer, a second self-healing layer which is disposed adjacent to and surrounds the additional layer, and an external jacket layer which is disposed adjacent to and surrounds the second self-healing layer.

Or, in an alternative preferred embodiment, the single core electrical cable comprises a conductive core which is disposed adjacent to and surrounded by a first semi-conductive layer, an insulating layer which is disposed adjacent to and surrounds the first semi-conductive layer, a second semi-conductive layer which is disposed adjacent to and surrounds the insulating layer, a first self-healing layer which is disposed adjacent to and surrounds the second semi-conductive layer, a metallic screen which is disposed adjacent to and surrounds the first self-healing layer, a sheath which is disposed adjacent to and surrounds the metallic screen, a second self-healing layer which is disposed adjacent to and surrounds the sheath, a bedding layer which is disposed adjacent to and surrounds the second self-healing layer, an additional layer which is disposed adjacent to and surrounds the bedding layer, and an external jacket layer which is disposed adjacent to and surrounds the additional layer.

Alternatively, in other preferred embodiments, the cable may comprise a plurality of cores, and be referred to as a multi-core electrical cable. The cable may comprise at least two cores or more preferably at least three cores. As such, the cable may comprise a dual core or triple core electrical cable.

Preferably, the cable comprises a plurality of cable elements each comprising a conductive core, and an outer casing surrounding the cable elements. The cable preferably comprises at least one filler and/or at least one optical fibre element, which are also surrounded by the outer casing. Preferably the filler comprises polyvinylchloride (PVC), polyethylene (PE) and/or chlorinated polyethylene. Alternatively or additionally, the filler may comprise a flame retardant inorganic filler, such as magnesium hydroxide and aluminium hydroxide.

Preferably, each cable element comprises an insulating layer. Each cable element may comprise one or more semi-conductive layers. Each cable element may comprise a sheath. In a preferred embodiment, each cable element comprises a first self-healing layer. Each cable element may comprise a metallic screen. Each of these layers may be as previously defined above.

Accordingly, in one embodiment each cable element comprises a conductive core, a first semi-conductive layer which is disposed adjacent to and surrounds the conductive core, an insulating layer which is disposed adjacent to and surrounds the first semi-conductive layer, a second semi-conductive layer which is disposed adjacent to and surrounds the insulating layer, a metallic screen which is disposed adjacent to and surrounds the second semi-conductive layer, a first self-healing layer which is disposed adjacent to and surrounds the metallic screen, and a sheath which is disposed adjacent to and surrounds the first self-healing layer.

However, in a preferred embodiment the first self-healing layer is surrounded by the metallic screen. Accordingly, in a preferred embodiment, each cable element comprises a conductive core, a first semi-conductive layer which is disposed adjacent to and surrounds the conductive core, an insulating layer which is disposed adjacent to and surrounds the first semi-conductive layer, a second semi-conductive layer which is disposed adjacent to and surrounds the insulating layer, a first self-healing layer which is disposed adjacent to and surrounds the second semi-conductive layer, a metallic screen which is disposed adjacent to and surrounds the first self-healing layer, and a sheath which is disposed adjacent to and surrounds the metallic screen.

Preferably, each cable element comprises a second self-healing layer. Preferably, the second self-healing layer is extruded around the core. Preferably, the second self-healing layer comprises a dry self-healing layer. Preferably, the second self-healing layer is disposed adjacent to and surrounds the metallic screen, in embodiments where one is present. Preferably, the second self-healing layer is disposed adjacent to and surrounded by the sheath, in embodiments where one is present.

Accordingly, in a further preferred embodiment, each cable element comprises a conductive core, an inner semi-conductive layer which is disposed adjacent to and surrounds the conductive core, an insulating layer which is disposed adjacent to and surrounds the inner semi-conductive layer, an outer semi-conductive layer which is disposed adjacent to and surrounds the insulating layer, a first self-healing layer which is disposed adjacent to and surrounds the outer semi-conductive layer, a metallic screen which is disposed adjacent to and surrounds the first self-healing layer, a second self-healing layer which is disposed adjacent to and surrounds the metallic screen, and a sheath which is disposed adjacent to and surrounds the second self-healing layer.

The outer casing may comprise an external jacket layer. The outer casing may comprise an additional layer. Optionally, the outer casing comprises a bedding layer. Each of these layers may be as previously defined above.

The outer casing may comprise a cellular foam layer, preferably comprising a thermoplastic elastomer (TPE). The cellar foam layer may be disposed adjacent to and surrounded by the external jacket layer and may be disposed adjacent to and surround the additional layer.

The outer casing may be configured to allow water to pass therethrough. Accordingly, in one embodiment the outer casing comprises a bedding layer, an additional layer which is disposed adjacent to and surrounds the bedding layer, a cellular foam layer which is disposed adjacent to and surrounds the additional layer and an external jacket layer which is disposed adjacent to and surrounds the cellular foam layer.

However, in a preferred embodiment, the outer casing comprises an outer self-healing layer. The outer self-healing layer may comprise a cellular water swelling thermoplastic elastomer (TPE). Additionally or alternatively, the outer self-healing layer comprises a wet self-healing layer. The outer self-healing layer may be disposed adjacent to and surrounded by the bedding layer, in embodiments where one is present. Alternatively, the outer self-healing layer may be disposed adjacent to and surround the additional layer, in embodiments where one is present. Optionally, the outer self-healing layer is disposed adjacent to and surrounded by the external jacket layer, in embodiments where one is present.

The outer casing may be configured to not allow water to pass therethrough. Accordingly, in a preferred embodiment the outer casing comprises a bedding layer, an additional layer which is disposed adjacent to and surrounds the bedding layer, an outer self-healing layer which is disposed adjacent to and surrounds the additional layer and an optional external jacket layer which, when present, is disposed adjacent to and surrounds the outer self-healing layer.

It will be understood that for a cable of the first aspect, including both the single core electrical cable and the multi-core electrical cable, it is advantageous to be able to detect defects visually. Accordingly, the cable may comprise a dye configured to aid the detection of a defect. The dye may be provided in any layer of the cable except the external layer. The dye may be provided in the first self-healing layer, the second self-healing layer, the bedding layer, the additional layer, the cellular foam layer and/or the outer self-healing layer. The dye may comprise fluorescein and/or CI Solvent Yellow. The dye may be UV sensitive.

A self-repairing cable in accordance with the first aspect may be manufactured differently to self-repair cables known in the prior art.

Accordingly, in accordance with a second aspect of the invention, there is provided a method for manufacturing a self-repair cable, the method comprising extruding self-healing material to form a self-healing layer around an inner portion of the cable, thereby forming a self-repair cable, wherein the water swelling material comprises:
- a water swelling thermoplastic elastomer (TPE) comprising poly(styrene-block-butadiene-block-styrene) or poly(styrene-block-ethene-co-butane-block-styrene) or poly(styrene-block-ethylene-co-butylene-block-styrene), and a hydrophilic additive; or
- a water swelling rubber.

Advantageously, forming the self-healing layer around the core by extrusion is much less labour-intensive than the methods used to manufacture prior art self-repairing cables. Accordingly, that the manufacture of self-repairing cables in accordance with the present invention is quicker, cheaper and less prone to errors.

The method of the second aspect is preferably used to manufacture the self-repair cable according to the first aspect.

Hence, the self-healing material may further comprise a supramolecular matrix and/or a shape memory polymer (SMP).

The water swelling material may comprise a water swelling thermoplastic elastomer (TPE) or a water swelling rubber.

The water swelling TPE may comprise a polymer that is capable of forming a thermoplastic matrix and a hydrophilic additive. For example, the polymer may comprise poly(styrene-block-butadiene-block-styrene) or poly(styrene-block-ethylene-co-butylene-block-styrene). The hydrophilic additive may comprise one or more hydrophilic side chains grafted onto the polymer. Preferably, the hydrophilic side chains comprise poly(acrylic acid), maleic acid or sodium polyacrylate.

The water swelling rubber may comprise a rubber matrix and a hydrophilic additive. The rubber matrix may comprise a natural rubber. The hydrophilic additive may comprise one or more hydrophilic side chains grafted onto the rubber. The hydrophilic additive may comprise poly(acrylic acid), maleic acid or sodium polyacrylate.

It has been observed that water swelling materials swell faster and more extensively if they have been previously immersed in water. Accordingly, if the self-healing material comprises a water swelling material the method may comprise a pre-wetting step. The pre-wetting step may be carried out subsequent to extruding the water swelling material. The pre-wetting step would comprise exposing the outer surface of the extruded water swelling material to a small quantity of water.

Advantageously this would create a region of enhanced response.

The supramolecular matrix may comprise molecules capable of forming labile bonds, for example, at least one of hydrogen bonds, π-stacking, or ionic bonds. Preferred molecules may comprise a polyimide or a polyamide. Alternatively, the molecule may comprise an ionomer. The supramolecular matrix may comprise a supramolecular polymer or a supramolecular thermoplastic elastomer.

The shape memory polymer (SMP) may comprise a polymeric smart material programmed into the desired shape, wherein if the SMP is deformed then the original shape may be recovered once the shape memory polymer is exposed to a trigger. The trigger may comprise a specific temperature or temperature range, an electrical field, light and/or water. Preferably, the shape memory polymer comprises a thermoplastic polyurethane. Preferably, the shape memory polymer comprises a covalently cross-linked thermoset, such as polynorbornene functionalized with poly-caprolactone and cyano group. Preferably, the shape memory polymer comprises a covalently cross-linked semi-crystalline network, such as a polymer network containing poly(octadecyl vinyl ether)-co-BA. Preferably, the shape memory polymer comprises a physically cross-linked copolymer, such as ethylene oxide-ethylene terephthalate segmented copolymer. Preferably, the shape memory polymer comprises a physically cross-linked semi-crystalline block copolymer, such as polyurethane block copolymers with shape memory effect.

The method preferably comprises initially melting the material prior to its extrusion into the self-healing layer.

The method preferably comprises an initial step, carried out prior to the step of extruding the self-healing material, wherein the initial step comprises manufacturing the inner portion of the cable. The step of manufacturing the inner portion of the cable preferably comprises forming a conductive copper core by drawing a copper rod to make a copper wire and filaments and then combining these into a circular cross section conductor which may be a uniform cross section or a segmented cross section.

The step of manufacturing the inner portion of the cable preferably comprises providing the conductive copper core with an insulating layer. Preferably, this step comprises extruding polyethylene to form an insulating layer which surrounds the conductive core. The method may involve cross-linking the polyethylene. The cross-linking step may be carried out before or after the extrusion step.

Preferably, the step of manufacturing the inner portion comprises an additional step carried out prior to the step of providing the insulating layer, the step additional comprising providing the conductive copper core with an inner semi-conductive layer which is adjacent to and surrounds the conductive copper core. Preferably, the step of manufacturing the inner portion comprises a further additional step carried out subsequently to the step of providing the insulating layer, the further additional step comprising providing the inner portion with an outer semi-conductive layer which is adjacent to and surrounds the insulating layer.

The method may comprise at least one additional step, carried out subsequently to the step of extruding the self-healing material, wherein the additional step comprises surrounding the self-healing layer with a further layer. The further layer may comprise a metallic screen, a sheath, an additional layer comprising a plurality of wires, a bedding layer or an additional self-healing layer.

In embodiments of the method which comprise a pre-wetting step, the additional step maybe carried out subsequent to the pre-wetting step.

The step of providing the at least one further layer may comprise extruding the further layer. Alternatively, the step of providing the at least one further layer may comprise wrapping a tape round a partially formed cable to create the further layer.

It will be appreciated that the cable of the first aspect may be used in a variety of environments.

Accordingly, in accordance with a third aspect of the invention, there is provided use of the cable of the first aspect in a substantially wet environment.

The substantially wet environment may comprise a submarine environment.

The cable may comprise a plurality of cable elements, each comprising a conductive core, and an outer casing surrounding the cable elements. Preferably the outer casing is configured to allow water to pass therethrough.

In accordance with a fourth aspect of the invention, there is provided use of the cable of the first aspect in a substantially dry environment.

The cable may comprise a plurality of cable elements, each comprising a conductive core, and an outer casing surrounding the cable elements. Preferably the outer casing is configured to not allow water to pass therethrough.

All features described herein (including any accompanying claims, abstract and drawings), and/or all of the steps of any method or process so disclosed, may be combined with any of the above aspects in any combination, except combinations where at least some of such features and/or steps are mutually exclusive.

For a better understanding of the invention, and to show how embodiments of the same may be carried into effect, reference will now be made, by way of example, to the accompanying Figures, in which:-
**Figure 1** is a cross-sectional view of a prior art single core cable;
**Figure 2** is a cross-sectional view of a prior art triple core cable;
**Figure 3** is schematic side view of showing the structure of a prior art water blocking tape;
**Figure 4a** is a photo of water blocking tape with a defect;
**Figure 4b** is a photo of the water blocking tape of Figure 4a after it has been exposed to water;
**Figure 5** is a graph showing the change in load on a test rig caused by a sample of water blocking tape swelling in response to the presence in water over fifteen minutes;
**Figure 6** is a graph showing the change in load for the same sample as Figure 5, but over one hundred and twenty minutes;
**Figure 7** shows the chemical formula of poly(styrene-block-butadiene-block-styrene) (SBS);
**Figure 8** shows the chemical formula of poly(styrene-block-ethylene-co-butylene-block-styrene) (SEBS);
**Figure 9** shows the chemical formula of poly(acrylic acid);
**Figure 10** shows how ureido-4[1H]-pyrimidinone (UPy) forms labile bonds;
**Figure 11** is a schematic diagram showing a supramolecular polymer;
**Figure 12** shows a polyimide molecule capable of π stacking;
**Figure 13** shows a polyamide molecule capable of π stacking;
**Figure 14** is a schematic diagram showing a supramolecular thermoplastic elastomer;
**Figure 15a** shows the structure of a suitable precursor for an ionomeric monomer;
**Figure 15b** shows the structure of an ionomeric monomer which may be formed from the precursor of Figure 15a;
**Figure 16** shows a shape memory polymer (SMP) which, when triggered by water,
changes from an S-shape to a straight line;
**Figure 17** shows the chemical structure of a SMP;
**Figure 18** shows the chemical structure of polynorbornene functionalized with poly-caprolactone and cyano group which may form a covalently cross-linked glassy thermoset;
**Figure 19** shows the chemical structure of poly(octadecyl vinyl ether)-co-BA, a polymer which may form a covalently cross-linked semi-crystalline network;
**Figure 20** shows the chemical structures of ethylene oxide-ethylene terephthalate segmented copolymers, which may form a physically cross-linked glassy copolymer;
**Figure 21** shows the chemical structure of suitable polyurethane block copolymers with shape memory effect which may form a physically cross-linked semi-crystalline block copolymer;
**Figure 22** shows the chemical structure of sodium polyacrylate;
**Figure 23a** shows a self-healing composition comprising water swelling pellets distributed in a supramolecular polymer matrix;
**Figure 23b** shows the self-healing composition of Figure 23a where a defect has been introduced into the supramolecular polymer matrix;
**Figure 23c** shows the self-healing composition of Figures 23a and b after the composition has been exposed to water;
**Figure 24** is a cross-sectional view of an improved single core cable in accordance with a first embodiment of the invention;
**Figure 25** is a cross-sectional view of an improved triple core wet design cable in accordance with a second embodiment of the invention;
**Figure 26** is a cross-sectional view of an improved triple core dry design cable in accordance with a third embodiment of the invention;
**Figure 27** is a cross-sectional view of an apparatus for manufacturing a self-healing layer around an inner portion of a cable;
**Figure 28** shows the chemical formula of ClSEBS, a chloromethylated form of SEBS; and
**Figure 29** shows the chemical structure of a molecule capable of forming hydrogen bonds.

### Example 1: Cables used in the prior art

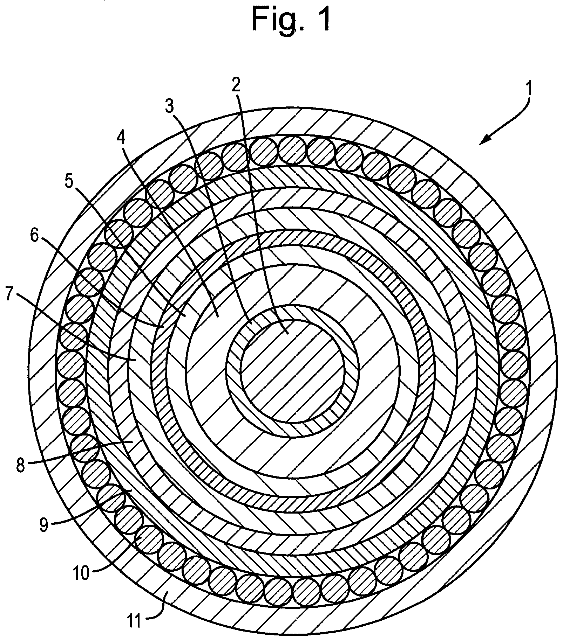

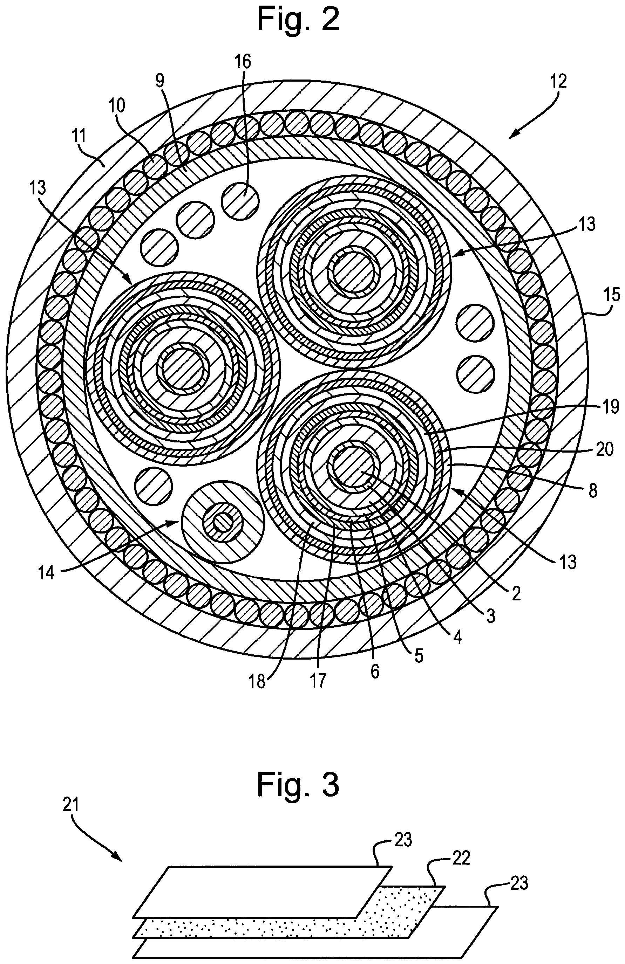

Figures 1 and 2 show the cross-section through power cables of the type available in the prior art. Both of these cables have a wet cable design, as explained below. Figure 1 shows a single core cable 1 comprising an inner copper core 2 for conducting electricity. A number of different concentric layers are disposed sequentially around the inner core 2 of cable 1. Immediately adjacent to the conductive core 2, there is disposed an inner semi-conductive layer 3, which would typically comprise a carbon-loaded polyethylene or ethylene copolymer (such as ethylene vinyl acetate (EVA) and ethylene butyl acrylate (EBA)), or blends thereof. Adjacent the inner semi-conductive layer 3, there is disposed an insulating layer 4 which may comprise cross-linked polyethylene. The semi-conductive layer 3 provides a degree of insulation for the insulating layer 4 from the conductive core 2 and the insulating layer 4 provides an insulating electrical barrier between the core 2 and the rest of the single core cable 1.

Adjacent the insulating layer 4, there is disposed an outer semi-conductive layer 5, as with the inner semi-conductive layer 3, this would typically comprise a carbon-loaded polyethylene or ethylene copolymer (such as ethylene vinyl acetate (EVA) and ethylene butyl acrylate (EBA)), or blends thereof. The purpose of the outer semi-conductive layer 5 is to maintain a defined electric field within the insulating layer 4 and at value below that which would cause electrical breakdown of the insulating layer 4. It also allows safe discharge of any charge build-up within the insulation layer 4 when the cable 1 is switched off. Adjacent the outer semi-conductive layer, there is disposed a water blocking tape layer 6. If the single core cable 1 were to be damaged creating a defect in the cable 1 the water blocking tape layer 6 is intended to swell upon contact with water which is penetrating the cable 1, preventing any water penetrating to the outer semi-conductive layer 5, insulating layer 4, inner semi-conductive layer 3 and conductive core 2.

Adjacent the water blocking tape layer 6, there is disposed an inner sheath 7 which would typically comprise lead. The inner sheath 7 is provided to try and prevent any defects penetrating the water blocking tape layer 6. The inner sheath 7 may have been formed due to a solid extrusion. Alternatively, the inner sheath 7 may have been formed from a flat extrusion or tape where the extrusion was then wrapped around the water blocking tape layer 6 and bonded. Adjacent the inner sheath 7 there is disposed an outer sheath 8, which would typically comprise medium or high density polyethylene (MDPE or HDPE), polypropylene (PP) and/or poly(oxymethylene). The outer sheath 8 is provided to prevent the inner sheath 7 from being exposed to water and thereby protects the inner sheath 7 from corrosion.

Adjacent the outer sheath 8 there is disposed a bedding layer 9, which would typically comprise polyvinyl chloride (PVC), an ethylene copolymer (such as ethylene vinyl acetate (EVA) and ethylene butyl acrylate (EBA)), a thermoplastic polyester (such as polybutylene terephthalate (PBT) or polyethylene terephthalate (PET)), and adjacent the bedding layer 9 there is disposed a layer of galvanised steel wires 10, which can be filled with a bitumen compound. The bedding layer 9 is provided to hold the layer of galvanised steel wires 10 in place, and the layer of galvanised steel wires 10 is provided to prevent any defects from occurring in the structure. Finally, an external jacket layer 11 is provided which typically comprises a water permeable yarn cladding made of polypropylene. The external jacket layer 11 is provided to assist the bedding layer 9 in holding the layer of galvanised steel wires 10 in place. Water may pass through the yarn cladding layer 11, galvanised steel wires 10 and bedding layers.

Figure 2 shows a triple core electric cable 12. The cable 12 comprises three spaced apart cable elements 13 and a fibre optic element 14 all contained within an outer jacket casing 15. The three cable elements 13 and the fibre optic element 14 are held in place by several spaced apart filler elements 16 which typically comprise polyvinylchloride (PVC), polyethylene (PE) and/or chlorinated polyethylene. However, newer alternatives, which have arisen due to environmental concerns, may comprise a flame retardant inorganic filler, such as magnesium hydroxide and aluminium hydroxide. Each cable element 13 comprises a conductive core 2 and a series of concentric layers disposed around the conductive core 2 as explained below.

As with the single core electric cable 1 shown in Figure 1, adjacent the conductive core 2 there is disposed an inner semi-conductive layer 3, then an insulating layer 4, then an outer semi-conductive layer 5, then water blocking tape layer 6. In contrast to the single core electric cable 1 of Figure 1, in the triple core cable shown in Figure 2, adjacent to the water blocking tape layer 6 there is disposed a copper counter helix 17, and disposed outside the helix 17, there is disposed a copper counter screen 18. The helix 17 and screen 18 are provided to provide a conducting earth plane or a reference voltage plane to support electrical measurements of the cable and/or an electrical protection function. A water blocking tape layer 19 is also provided. As with the single core cable 1, this water blocking tape layer 19 is intended to swell upon contact with water which is penetrating the cable 12, preventing any water penetrating to the outer semi-conductive layer 5, insulating layer 4, inner semi-conductive layer 3 and conductive core 2. Adjacent the swelling tape layer 19, there is disposed an aluminium tape layer 20, which tape provides both a water blocking barrier and an electrical screen. The latter function reduces the electric field beyond the layer to avoid electrical discharge and corona which could damage the cable internally and to reduce the generation of eddy currents from electromagnetic coupling with nearby cables. Finally, an outer sheath 8 is provided adjacent to the aluminium tape layer 20. Similar to the single core electric cable 1, the outer casing 15 in Figure 2 comprises an inner bedding layer 9, an outer yarn cladding layer 11, which may comprise polypropylene, and in between these two layers there is disposed a layer of galvanised steel wires filled with a bitumen compound 10.

The triple core electric cable 12 illustrated in Figure 2 is known as a wet cable, as water may pass through the outer casing 15 but will not be able to penetrate the cable elements 14 as the water will not be able to pass through the outer sheath 8. Typically, due to all of the protection provided, no defects will penetrate the cable any further than the water blocking tape layer 6, and this is why the problems associated with water blocking tape 21 have not previously been recognised. However, when a defect does manage to penetrate this deeply if the water-blocking tape 6 fails, then eventually the defect could extend to the conductive core 2 causing the cable 12 to fail. Such a failure can be disastrous due to the inaccessible nature of many cables. It is for this reason that it is highly desirable to develop an improved self-healing system.

While not illustrated, it will be appreciated that prior art dry design cables are predominantly as described above, except the external jacket layer 11 will comprise a water impermeable outer sheath.

### Example 2: Water blocking tape

The water blocking tape layer 6 used in the cables 1, 12 shown in Figures 1 and 2 comprises water blocking tape 21. During manufacture, this tape 21 must be wrapped round the outer semi-conductive layer 5, which means manufacture of cables comprising a water blocking tape layer 6 is labour intensive, resulting in the cables being costly. The structure of a typical non-woven water blocking tape 21 is shown in Figure 3. The tape comprises an inner superabsorbent gel layer 22 sandwiched between two non-conductive layers 23, which comprise polyester. Alternatively, a woven water blocking tape may instead comprise a woven layer impregnated with a water-absorbent powder.

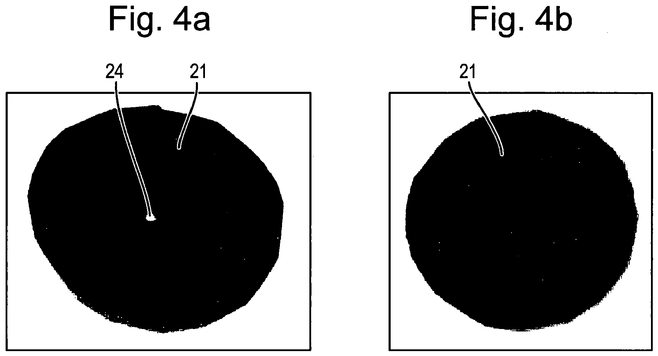

Figure 4a shows a water blocking tape 21 provided with a void 24. The superabsorbent gel provided in the water blocking tape 21 can easily absorb its own weight in water. As shown in Figure 4b, when the water blocking tape 21 was exposed to water, the absorption caused the tape to swell, thereby filling the void 24.

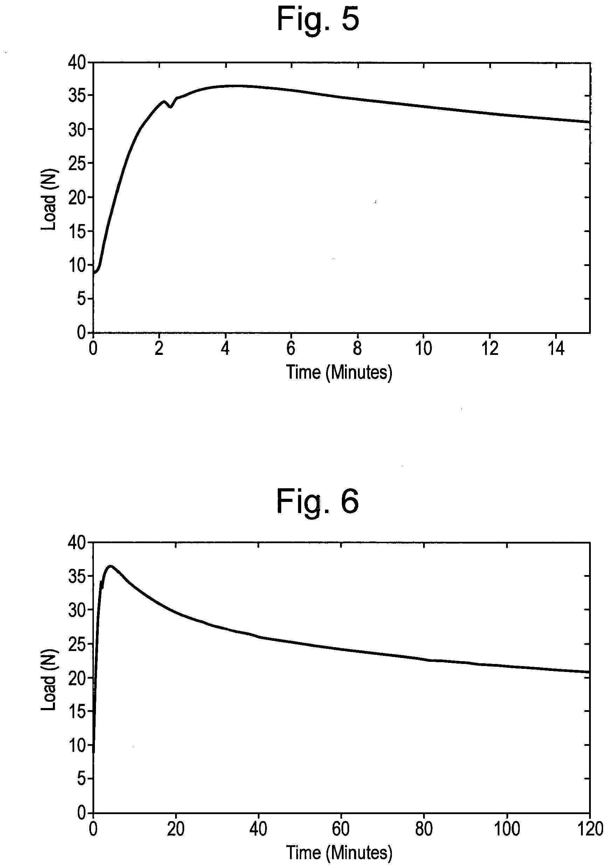

However, the inventors have found that the water blocking tape 21 is not fully effective in preventing water movement across the tape normal to the surface of the tape which is important for radial water blocking in the cable and it is also not fully effective in preventing water movement in the plane of the tape which is important for longitudinal water blocking in the cable. The inventors have found that the water blocking tape may completely fail if exposed to water over an extended period of time. To illustrate this, a sample of a water blocking tape 21 was exposed to water and the swelling pressure caused by the absorption of water was measure over time. The graphs shown in Figures 5 and 6 show the results obtained where the swelling pressure is represented by the load. Initially, the water blocking tape 21 absorbed water very quickly, but then lost structural integrity resulting in a loss of swelling pressure as the superabsorbent gel layer 22 dissolved into the water.

These measurements were supported by the visual observation of clear gelatinous material appearing in the water as it seeped out of the water blocking tape 21. Accordingly, the protective capabilities of the water blocking tape 21 are short-lived, particularly in moist or submarine environments.

To overcome the problems associated with water blocking tape 21, the inventor has developed a self-repairing cable comprising a self-healing layer.

### Example 3: Water Swelling Thermoplastic Elastomers (TPEs)

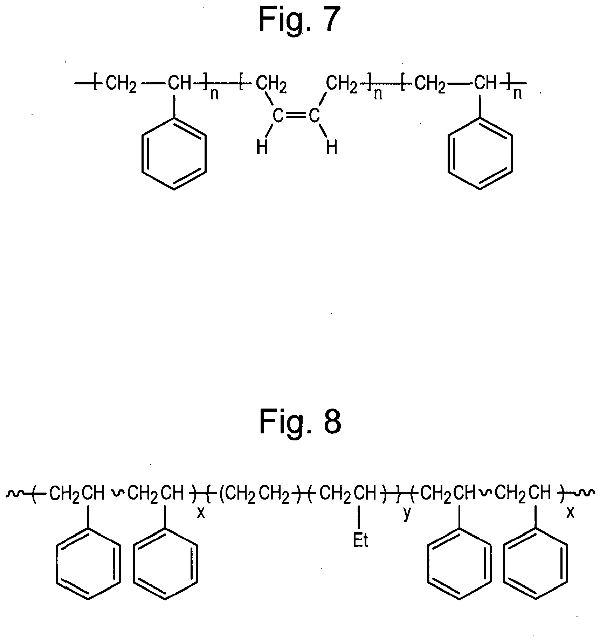

Water swelling thermoplastic elastomers (TPEs) contain two distinct parts: (i) a thermoplastic matrix, which provides structure and processability, and (ii) a hydrophilic additive, which confers the water swelling capability. Two such TPEs are poly(styrene-block-butadiene-block-styrene) (SBS) and poly(styrene-block-ethylene-co-butylene-block-styrene) (SEBS). The structures of SBS and SEBS are illustrated in Figures 7 and 8. The structures comprise styrene end groups which harden the material and provide it with thermoplastic properties, while the butadiene and butylene structures in the centre confer the elastomeric properties.

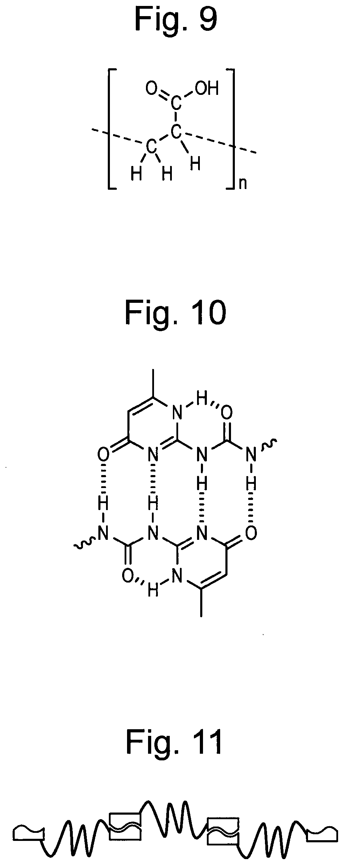

In the pure form, TPEs are hydrophobic. However, this can be overcome by grafting hydrophilic side chains onto the polymer backbone. A commonly selected molecule to graft on is poly(acrylic acid), illustrated at Figure 9. The OH group on the poly(acrylic acid) will deprotonate if immersed in water, leaving a negatively charged oxygen. The presence of a negative charge on the polymer backbone causes an influx of electrolytes which generates an osmotic pressure gradient. As a result, water will flow into the region to restore equilibrium, resulting in the deformation and swelling of the polymer matrix.

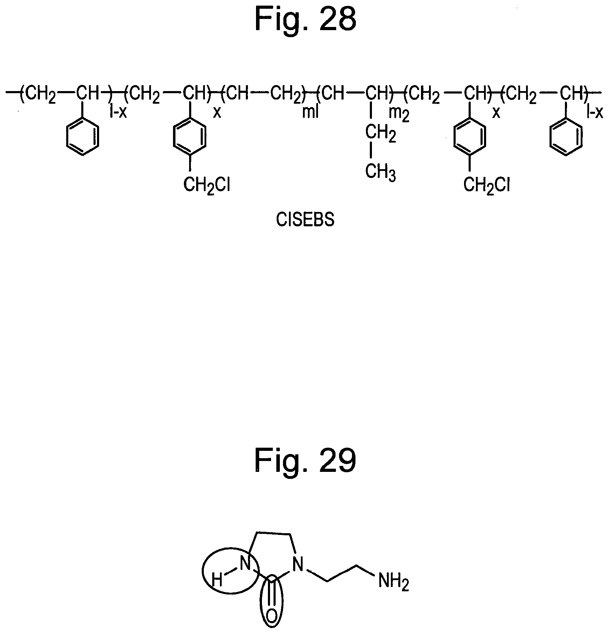

It is possible to graft the poly(acrylic acid) groups onto SEBS chains by firstly grafting poly(butylacrylate) through the addition of tert-butylacrylate (tBA) to a polymer melt in the presence of 2,2-bipyridine, copper chloride, and the initiator C1SEBS (a chloromethylated form of an SEBS, as shown in Figure 28). The resultant butylacrylate side group can then be hydrolysed to form poly(acrylic acid) by refluxing the copolymer in a mixture of 10/1 dioxane / HCL over the course of 2 days¹.

Alternatively, the hydrophilic properties of TPEs can be improved by grafting other hydrophilic groups, such as maleic acid, onto the polymer backbone. The hydrophilicity of TPEs can also be increased by incorporating more polar groups (i.e. OH, NH2, etc²) and decreasing the number of non-polar groups (CH₃, benzene groups, etc³). The degree of swelling can be controlled by the concentration of charged molecules grafted to the TPE backbone. A higher concentration of charged molecules results in a greater osmotic gradient and so a larger response⁴. The degree of swelling is also influenced by the electrolyte concentration of the surrounding media. It has been shown experimentally that materials using this response method swell to a lesser degree if immersed in salt water, where the high electrolyte concentration mitigates the effect of the deprotonated charged groups⁴.

Where a water swelling TPE is being used in a self-healing layer of a self-repairing cable then the concentration of the hydrophilic groups should be selected depending on the environment in which the cable was intended to be used. For instance, if the cable was intended to be used in a submarine environment, where any defects would expose the self-healing layer to salt water, the concentration of the hydrophilic groups in the water-swelling TPE would need to be higher than in a cable which wasn't going to be exposed to salt water, for instance a cable which was intended to be used underground and which might be exposed to fresh water. The concentration of the charged molecules in water swelling TPE should be selected to ensure the water swelling TPEs would swell sufficiently to block a defect without threatening the overall structural integrity of the system.

It has been found that water swelling TPEs are stable up until at least 150°C, but it is not anticipated that a cable will function at a temperature significantly greater than 90°C. For this reason, water swelling TPEs are suitable for use as a self-healing layer in a self-repairing cable.

### Example 4: Supramolecular material

Supramolecular polymers are polymers wherein the monomers are held together by 'labile' bonds *i.e.* non-covalent bonds including hydrogen bonding, π-stacking, or ionic bonds. In the event that the material is damaged, these bonds are temporarily broken, but can reform with another part of the damaged material to restore the breach. A key advantage of materials in this class is that repaired materials are mechanically identical to undamaged materials.

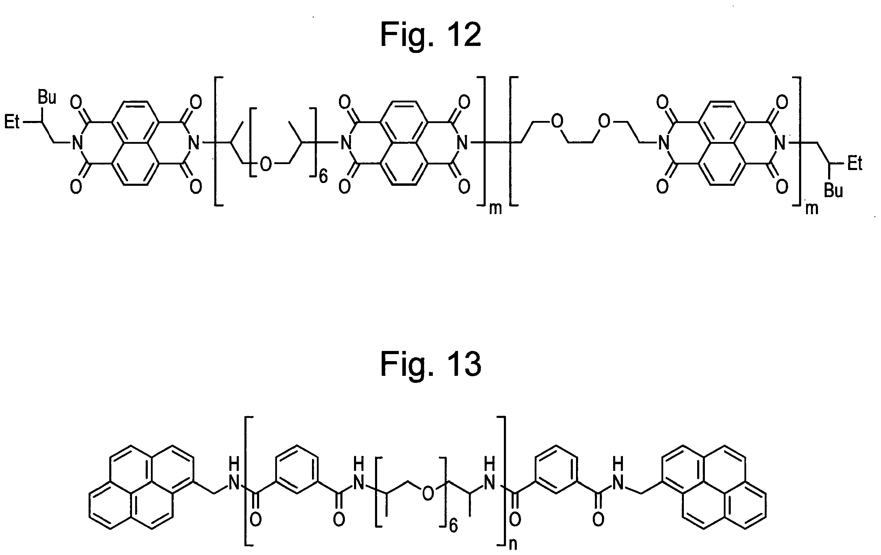

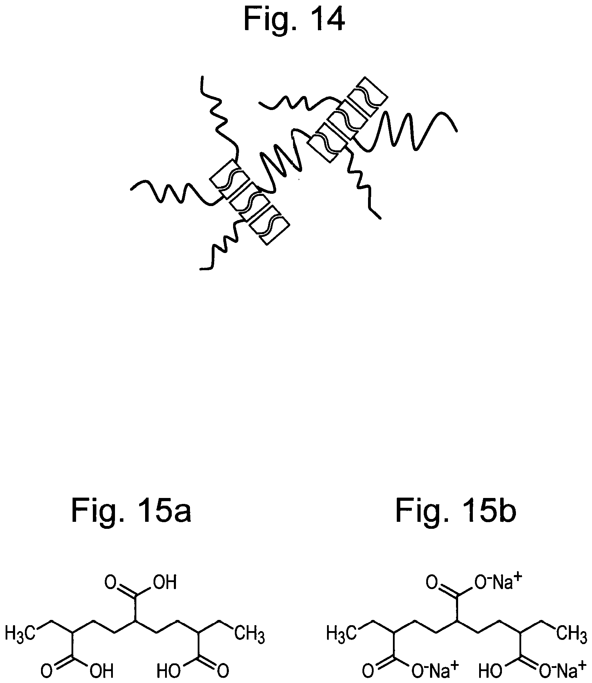

Examples of groups which forms hydrogen bonds are ureido-4[1H]-pyrimidinone (UPy), as shown in Figure 10, and the molecule shown in Figure 29. Two such groups joined by a linker would comprise a suitable monomer for a supramolecular polymer, and this is illustrated schematically in Figure 11. Additionally, it is possible for materials that contain π orbitals to interact with one another via stacking of these groups. Figures 12 and 13 show a polyimide and polyamide molecule respectively, which would be capable of forming a supramolecular thermoplastic elastomer due to the π stacking interactions which would occur between the molecules. This is illustrated schematically in Figure 14.

Finally, ionomers are a class of polymers that contain ionic groups within their backbone, along with neutral repeating units. Due to the polar nature of the ionic groups, they tend to associate preferentially with one another over the polymer backbone, resulting in the formation of clusters that effectively pin the polymer structure in place. An example of the structure of an ionomeric monomer is shown in Figure 15b, and Figure 15a shows a precursor for the ionomeric monomer.

Such materials are highly suitable for self repair after ballistic impact (or any point where there is a generation of heat) as this can cause the temporary dissociation of the ionic groups and allow the polymers to flow into damaged regions. When the system cools, the ionic groups will self-assemble into clusters, solidifying and fortifying the newly-repaired polymer.5

### Example 5: Shape memory polymers (SMPs)

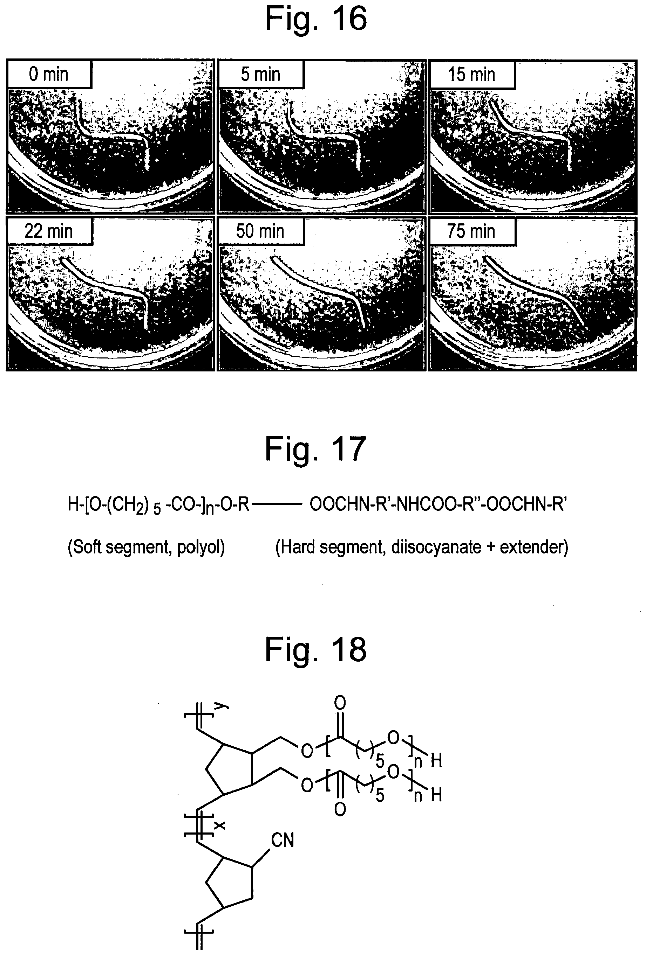

Shape memory polymers (SMPs) are polymeric smart materials that can be 'programmed' into a particular state. If deformed, it is possible to recover this state through the application of a trigger, which may be temperature, electrical field, water or even light. An example of this is shown in Figure 16, where an SMP wire is triggered by water and changed from an S-shape to a straight line after 75 minutes exposure time.

Investigations into SMPs have uncovered a number of different structures that, when copolymerized, exhibit a shape-memory effect. A simple example is a thermoplastic polyurethane developed by Mitsubishi, this is shown in Figure 17. This material has two triggers: heating the material above its T_{g} (36.7°C) causes the material to soften and return to its original state. However, exposure to water causes the T_{g} to fall to 22°C, effectively allowing shape memory effects to take place under ambient conditions.⁶

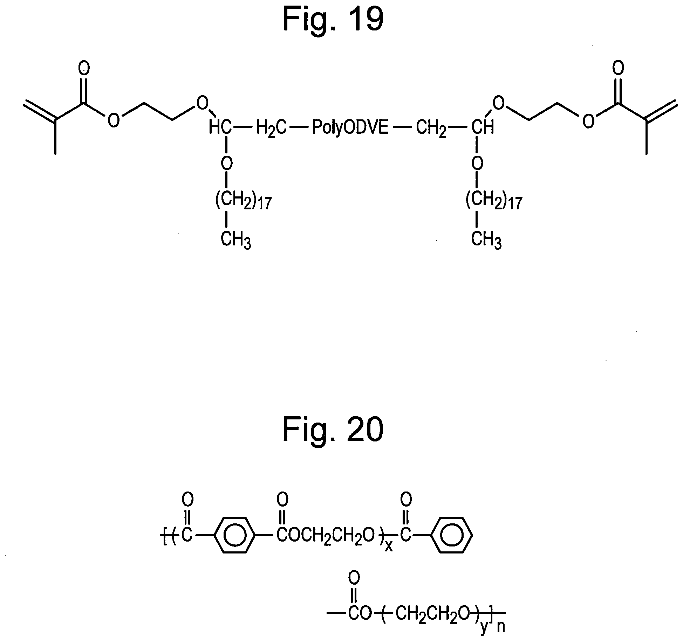

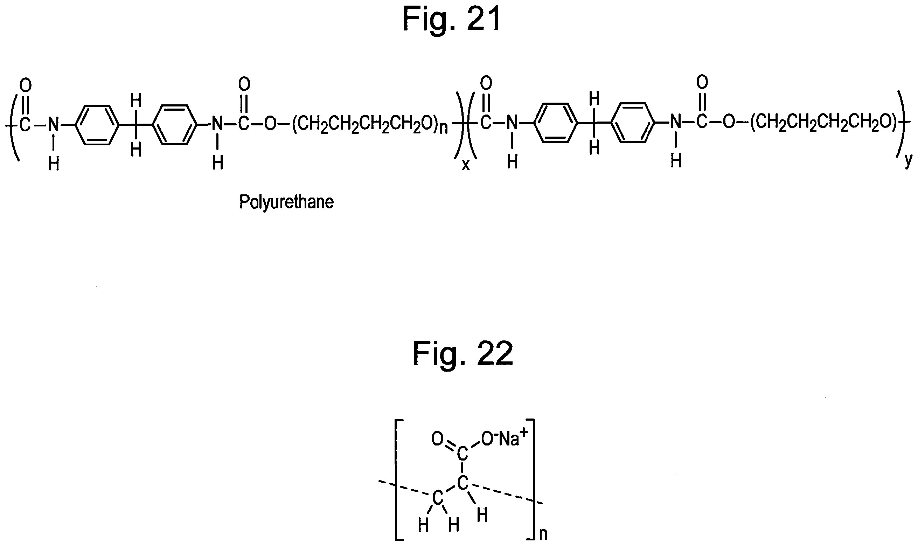

Further investigations into SMPs have shown that there are a number of different classes of SMPs⁷. These include:
- Covalently cross-linked thermosets, these are highly flexible initially and provide excellent recovery characteristics. However, once programmed this system is difficult to reshape owing to the use of covalent bonds in creating the permanent state. An example of a covalently cross-linked glassy thermoset is polynorbornene functionalized with poly-caprolactone and cyano group, this is shown in Figure 18.⁸
- Covalently cross-linked semi-crystalline networks, as with covalently cross-linked glassy thermosets, materials of this type are difficult to reshape once set, but provide faster recovery speeds. An example of a covalently cross-linked semi-crystalline network is a polymer network containing poly(octadecyl vinyl ether)-co-BA shown in Figure 19.⁹
- Physically cross-linked copolymers, these are easier to process than either covalently cross-linked thermosets or covalently cross-linked semi-crystalline networks, as the material can flow and reshaped at high temperatures. Typically these materials rely on entanglement regions to provide structure, but are compatible with other reversible bonding systems such as hydrogen bonding and ionomeric bonding. An example of a physically cross-linked copolymer is ethylene oxide-ethylene terephthalate segmented copolymer, shown in Figure 20.¹⁰
- Physically cross-linked semi-crystalline block copolymers utilize the melting point of the soft domains, while many SMPs rely on heating above the glass transition point to induce reformation. When the crystallites in the soft domains are melting the material is rubbery and can be easily shaped without flowing, only freezing in position when the material solidifies. An example of a physically cross-linked semi-crystalline block copolymer is polyurethane block copolymers with shape memory effect, shown in Figure 21.¹¹

### Example 6: Water swelling rubbers

Similar to water swelling TPEs, water swelling rubbers comprise a hydrophobic rubber matrix that contains a hydrophilic additive. The hydrophilic additive is commonly poly(acrylic acid), maleic acid or sodium polyacrylate which is illustrated in Figure 22. Accordingly, water swelling rubbers could be used in similar applications to TPEs.

### Example 7: Water swelling TPEs in a supramolecular polymer matrix

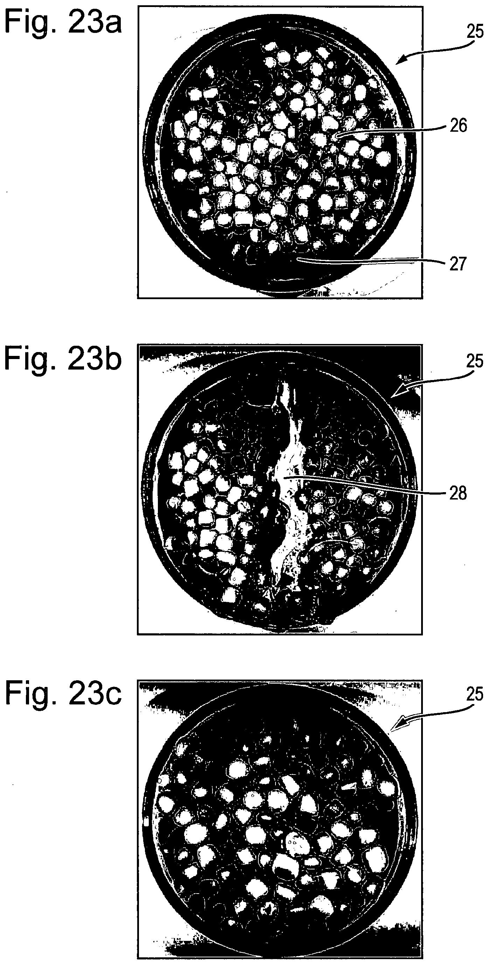

Figure 23a shows a self-healing composition 25 comprising pellets 26 distributed in a supramolecular polymer matrix 27, wherein the pellets comprise a water swelling TPE. Figure 23b shows the self-healing composition 25 of Figure 23a where a defect 28 which has been introduced into the supramolecular polymer matrix 27 due to the matrix having been scored with a spatula. Figure 23c shows the self-healing composition 25 of Figures 23a and b after the composition 25 was exposed to water. The water caused the pellets 26 to swell forcing the supramolecular polymer matrix 27 on either side of the defect 28 to be drawn together, closing the defect and enabling the matrix 27 to heal by reforming the labile bonds which were present before the defect was introduced. Due to the presence of the pellets 26 the matrix 27 was able to heal in less than an hour, much faster than it otherwise would have.

While the above experiment was carried out using pellets 26 comprising a water swelling TPE it will be readily appreciated that a similar system using pellets comprising a water swelling rubber would also be effective.

The inventors have found that a suitable self-healing composite 25 can comprise pellets 26 having a diameter from about 100 nanometres to about 1 millimetre. It will be appreciated that the speed that the matrix 27 is able to heal increases with decreasing pellet 26 size and is directly related to the effective pellet 26 surface area

### Example 8: Improved cable designs

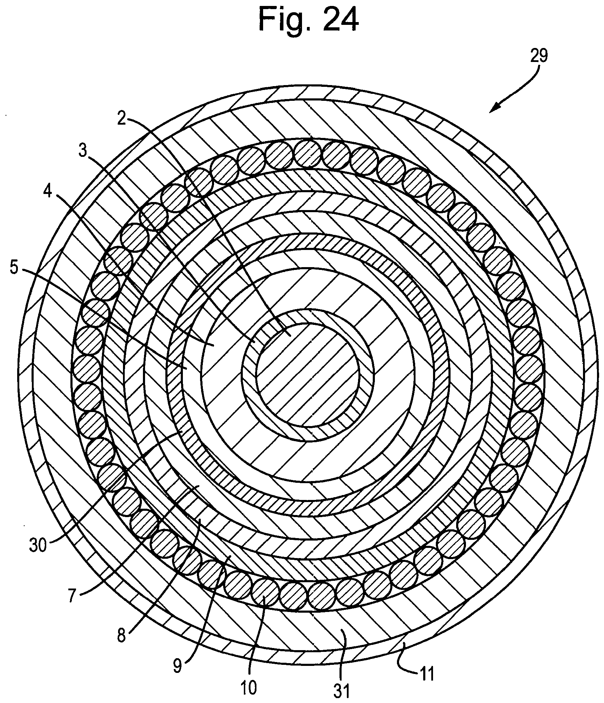

Figures 24, 25 and 26 show various embodiments of improved electric cable designs in accordance with the present invention. While only electric cables are shown, it will be appreciated that the present invention could be applied to any type of cable, including data communications and fibre optic cables.

Figure 24 shows a first embodiment of an improved single core electric cable 29. The single core electric cable 29 comprises an inner conductive core 2 made of copper. A series of concentric layers are disposed circumferentially around the conductive core 2. In order of the innermost layer, which is directly adjacent to the core 2, out to the external jacket layer 11, these layers comprise:- an inner semi-conductive layer 3, an insulating layer 4, an outer semi-conductive layer 5, a first self-healing layer 30, a lead sheath 7, an outer sheath 8, a bedding layer 9, a layer of galvanised steel wires 10, a second self-healing layer 31, and an external jacket layer 11 comprising a water permeable yarn cladding, which comprises polypropylene.

The first self-healing layer 30 comprises a water swelling thermoplastic elastomer (TPE) (see Example 3) compounded with a conductive material (such as fumed carbon, colloidal carbon, graphite or graphene).

As explained above, this will allow the first self-healing layer 30 to form stronger bonds with the outer semi-conductive layer. Additionally, as the first self-healing layer 30 comprises a water swelling thermoplastic elastomer (TPE) it will also act as a water-blocking layer. In general, when the a self-healing layer is provided close to the core 2 and/or the semi-conductive layers 3,5 then it is advantageous for this layer to be water-blocking and conductive.

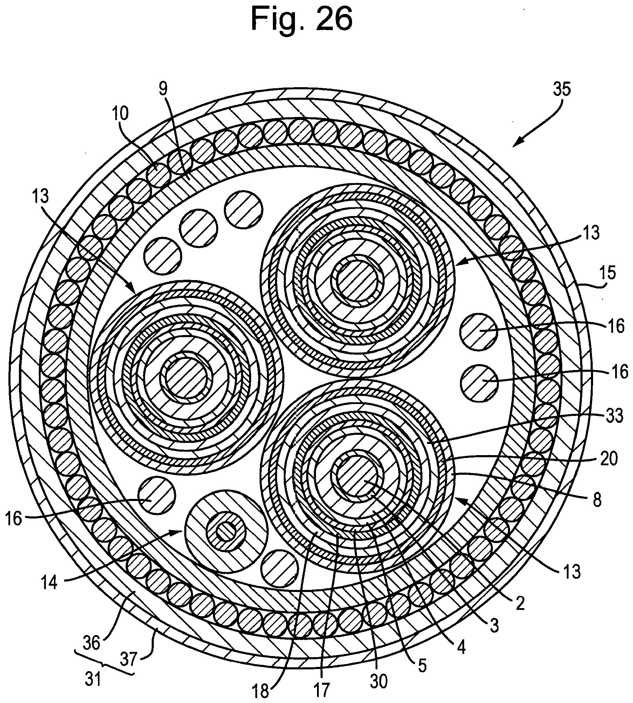

However, as previously mentioned, the external jacket layer 11 allows water to pass therethrough, which means that it would not be desirable for a hydrophilic material, such as water swelling TPEs or water swelling rubbers, to be provided adjacent to the external jacket layer 11. Accordingly, the second self-healing layer 31 ideally includes SMPs or a supramolecular matrix. Alternatively, in another embodiment, the second self-healing layer 31 can include two sub layers 36 and 37 (these are not illustrated in Figure 24 but a similar layer 31 is illustrated in Figure 26). The first sub layer 36 is disposed adjacent to the steel wire layer 10 and the second sub layer 37 is attached to the first sub layer 36 and is disposed between the first sub layer 36 and the external jacket layer 11. The first sub layer 36 comprises water swelling TPEs or water swelling rubbers, and the second sub layer 37 comprises a supramolecular matrix.

Accordingly, when no defects are present the first sub layer 36 will not be exposed to water due to the presence of the second sub layer 37. However, if the cable 29 were to be damaged causing a defect to form in at least the external jacket layer 11 and second self-healing layer 31 then the first sub layer 36 would be exposed to water causing the water swelling TPEs or water swelling rubbers to swell and thereby closing the defect, drawing the second sub layer 37 together, and enabling the supramolecular matrix to heal by reforming the labile bonds which were present before the defect was introduced. Investigations have shown that the two layers remain totally immiscible and non-bonding. Despite this, it has been shown that the first sub layer 36 can exert a force sufficient to bring two separate regions of the second sub layer 37 back together.

Unlike the first self-healing layer 30, the second self-healing layer 31 is electrically insulating.

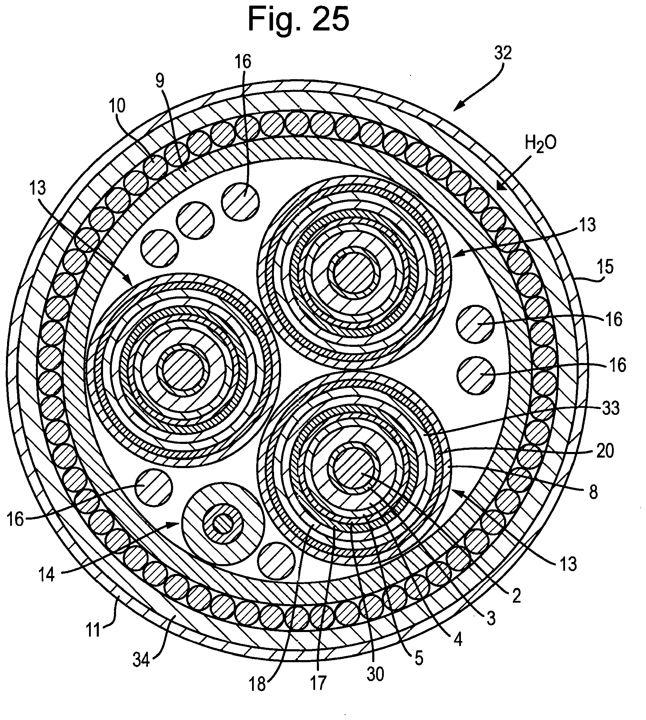

Referring now to Figure 25, there is shown a second embodiment of an improved triple core electric cable wet design 32. Similar to the triple core cable 12 used in the prior art shown in Figure 2, the improved triple core electric cable wet design 32 comprises three separate cable elements 13 and a fibre optic element 14 all of which are contained within an outer casing 15. Since the cable is wet design, water may penetrate the outer casing 15. The three cable elements 13 and the fibre optic element 14 are held in place by spaced apart filler elements 16. Each cable element 13 comprises a central conductive core 2 and a series of concentric layers which encase the conductive core 2, as explained below.

Adjacent the conductive core 2 there is disposed:- an inner semi-conductive layer 3, then an insulating layer 4, then an outer semi-conductive layer 5, then a first self-healing layer 30, then a copper counter helix 17, then a copper counter screen 18, then a third self-healing layer 33, then an aluminium tape layer 20 and finally an outer sheath 8. As with the improved single core electric cable 29, the first self-healing layer 30 in the second embodiment of the cable 32 consists of water swelling TPEs, water swelling rubbers, SMPs, a supramolecular matrix, or a combination thereof.

As explained above, it is advantageous for the first self-healing layer to comprise a semi-conductive hydrophilic self-repair elastomer, such as a water swelling thermoplastic elastomer (TPE) compounded with a conductive material (such as conductive carbon, graphite, graphene or other nanoscale conductive particulates).

The third self-healing layer 33 consists of water swelling TPEs, water swelling rubbers, SMPs, a supramolecular matrix or any combination thereof. Preferably, the third self-healing layer comprises water swelling TPEs.

The outer casing 15 includes an inner bedding layer 9, followed by a layer of galvanised steel wires 10, a layer of cellular foam 34 and finally the external jacket layer 11. Referring to Figure 26, there is shown a third embodiment of an improved triple core electric cable dry design 35. The improved triple core electric cable dry design 35 comprises three spaced apart cable elements 13 and a fibre optic element 14 all contained within an outer jacket casing 15. Since the cable 35 is dry design, water will not be able to penetrate the outer casing 15. The three cable elements 13 and the fibre optic element 14 are held in place by spaced apart filler 16. In the embodiment that is illustrated in Figure 26, each cable element 13 is identical to the cable elements provided in the triple core electric cable wet design 32 shown in Figure 25.

The outer casing 15 comprises an inner bedding layer 9, a layer of galvanised steel wires 10, and a second self-healing layer 31. This second self-healing layer 31 includes two sub layers 36 and 37. The first and second sub layers 36 and 37 are as described above in relation to the first embodiment of the single core electric cable 29 shown in Figure 24.

It will be understood that the materials which comprise the various layers which form the cables 29, 32, 35 of the invention will be selected to cause the layers to comprise processable peel strengths. Accordingly, the strength of bonding between adjacent layers will be strong enough that the layers will be incapable of relative movement in normal use. However, the strength of bonding will not be too great to prevent the layers from being peeled apart manually to aid in the installation and maintenance of the cable.

Advantages of the cables 29, 32, 35 of the invention reside in the ability of the self-healing layer to allow the cables to self-repair damage and prevent defects from propagating. Additionally, since the materials which form the self-healing layer do not undergo any irreversible chemical reactions, the self-healing layer is capable of self-healing multiple times, and can therefore protect the core of the cable from repeated damage inflicted on the cable, which would otherwise eventually penetrate to the core and ultimately result in the failure of the cable.

### Example 9: Manufacturing a cable

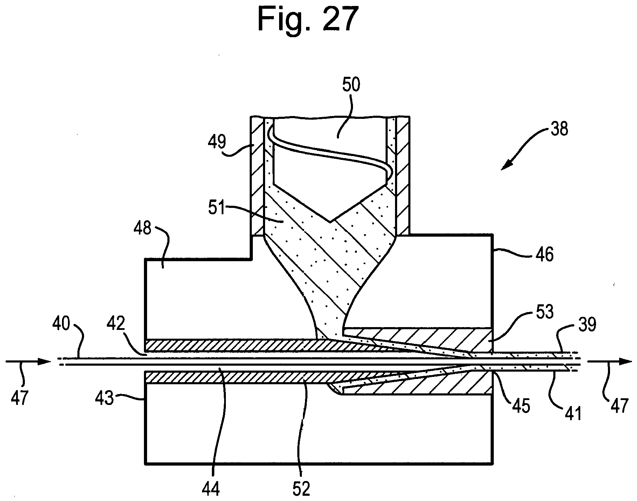

Another of the key advantages of the cables 29, 32, 35 described in Example 8 is that the self-healing layer may be extruded, and an apparatus 38 for adding a self-healing layer 39 to an inner portion 40 of a cable 41 is shown in Figure 27. The inner portion 40 of the cable comprises the conductive core 2, the inner semi-conductive layer 3, the insulating layer 4, and the outer semi-conductive layer 5.

The inner portion 40 of cable 41 is fed in a direction 47 into a slot 42 disposed in one side 43 of the apparatus 38. The inner portion 40 is then fed along direction 47 through a channel 44, which extends through a body 48 of the apparatus 38. The portion 40 ultimately exits body 48 through a slot 45 which is disposed in a second opposing side 46 of the apparatus 38.

Material which forms the self-healing layer 39 is fed into the apparatus 38 by means of a barrel 49 and screw 50 arrangement, which is disposed in an upper surface of the body 48. The material is initially melted, and then the melted material 51 is forced through the barrel 49, due to the action of the screw 50, into the main body 48 of the apparatus 38. Guiding strips 52 are disposed around the channel 44 and are provided to guide the melted material 51 around the channel 44. The thickness of the guiding strips decrease (or taper inwardly) closer to the second side 46 of the apparatus 38 such that, as the melted material 51 moves in direction 47 through the body 48, it is forced towards and around the inner portion 40.

A forming die 53 is disposed adjacent to the second slot 45 of the apparatus 38. As the melted material 51 is forced out of the second slot 45, the forming die 53 ensures it surrounds the inner portion 40 and possesses the desired thickness. As the melted material 51 is forced out of the second slot 45, it comes into contact with cooling air causing the melted material 51 to solidify, thereby forming the self-healing layer 39 around the inner portion 40. It will be appreciated that additional layers could be added to the cable 41, as desired.

As explained above, in some embodiments the cable may comprise a layer of cellular foam 34. This layer 34 may also be extruded, either with a gas forming additive or in an extrusion process which carries the gas itself.

Advantages of the apparatus 38 and method described above, which uses extrusion to manufacture cables, is that it allows a manufacturer to easily create cables having a complex cross-section. Such a method would not have been possible for manufacturing the prior art cables, which would be much more labour intensive to manufacture resulting in the methods of manufacture being more time consuming, more costly and more prone to errors.

### References

1. Ning, Fanglin, et al. "Synthesis of amphiphilic block-graft copolymers [poly (styrene - b - ethylene - co - butylene - b - styrene) - g - poly (acrylic acid)] and their aggregation in water." Journal of Polymer Science PartA: Polymer Chemistry 40.9 (2002): 1253-1266.
2. Licari, J.J. Enlow, L.R. (1998). Hybrid Microcircuit Technology Handbook (2nd Edition). William Andrew Publishing/Noyes.
3. Koleske, Joseph V. (2012). Paint and Coating Testing Manual - Fifteenth Edition of the Gardner-Sward Handbook: (MNL 17-2nd). ASTM International.
4. Durmaz, S., and O. Okay. "Acrylamide/2-acrylamido-2-methylpropane sulfonic acid sodium salt-based hydrogels: synthesis and characterization." Polymer 41.10 (2000): 3693-3704.
5. "Self-Healing Polymers via Supramolecular Forces", Florian Herbst, Diana Döhler, Philipp Michael, Wolfgang H. Binder, Macromolecular Rapid Communications, for publish 2013
6. W. M. Huang, B. Yang, Y. Zhao and Z. Ding: Thermo-moisture responsive polyurethane shape-memory polymer and composites: a review, J. Mater. Chem., 2010,20, 3367-3381
7. W. M. Huang, B. Yang, Y. Zhao and Z. Ding: Thermo-moisture responsive polyurethane shape-memory polymer and composites: a review, J. Mater. Chem., 2010,20, 3367-3381
8. Dan Yang, Wei Huang, Jiahui Yu, Jisen Jiang, Liya Zhang, Meiran Xie, A novel shape memory polynorbornene functionalized with poly(ε-caprolactone) side chain and cyano group through ring-opening metathesis polymerization, Polymer, Volume 51, Issue 22, 15 October 2010, Pages 5100-5106
9. Reyntjens, Wouter G., Filip E. Du Prez, and Eric J. Goethals. "Polymer networks containing crystallizable poly (octadecyl vinyl ether) segments for shape - memory materials." Macromolecular rapid communications 20.5 (1999): 251-255.
10. Luo, Xiaolie, et al. "Thermally stimulated shape - memory behavior of ethylene oxide - ethylene terephthalate segmented copolymer." Journal of applied polymer science 64.12 (1997): 2433-2440.
11. Lee, Bo Sun, et al. "Structure and thermomechanical properties of polyurethane block copolymers with shape memory effect." Macromolecules 34.18 (2001): 6431-6437.

## Claims

1. A self-repairing cable 29, 32, 35 comprising a core 2 surrounded by a solid self-healing layer 30, 31, 33 comprising a water-swelling material, **characterised in that** the water-swelling material comprises:
- a water-swelling thermoplastic elastomer (TPE) comprising poly(styrene-block-butadiene-block-styrene), poly(styrene-block-ethene-co-butane-block-styrene) or poly(styrene-block-ethylene-co-butylene-block-styrene), and a hydrophilic additive; or
- a water-swelling rubber.

2. A self-repairing cable 29, 32, 35 according to claim 1, wherein the self-healing layer 30 is extruded around the core 2.

3. A self-repairing cable 29, 32, 35 according to either claim 1 or 2, wherein the self-healing layer 30 further comprises a shape memory polymer (SMP), preferably wherein the shape memory polymer (SMP) comprises a polymeric smart material programmed into the desired shape, wherein if the SMP is deformed then the original shape is recovered once the shape memory polymer is exposed to a trigger, such as a specific temperature or temperature range, an electrical field, light and/or water, more preferably wherein the shape memory polymer comprises a thermoplastic polyurethane, a covalently cross-linked thermoset, such as polynorbornene functionalized with poly-caprolactone and cyano group, a covalently cross-linked semi-crystalline network, such as a polymer network containing poly(octadecyl vinyl ether)-co-BA, a physically cross-linked copolymer, such as ethylene oxide-ethylene terephthalate segmented copolymer, or a physically cross-linked semi-crystalline block copolymer, such as polyurethane block copolymers with shape memory effect.

4. A self-repairing cable 29, 32, 35 according to any preceding claim, wherein the self-healing layer 30 further comprises a supramolecular matrix, preferably wherein
- the supramolecular matrix incorporates a plurality of particles therein, wherein the particles comprise the water-swelling material; or
- the self-healing layer comprises first and second sub-layers, wherein the first sub-layer comprises the water swelling material and the second sub layer comprises the supramolecular matrix and the first sub-layer is closer to the core than the second sub-layer, and the first sub-layer is surrounded by the second sub layer; or
- the supramolecular matrix comprises molecules capable of forming labile bonds, for example at least one of hydrogen bonds, π-stacking, or ionic bonds, preferably wherein the molecules comprise a polyolefin (such as polyethylene (PE), polypropropylene (PP), an ethylene copolymer, an olefin polymer blend), a polyimide, a polyamide, a polyester (such as polyethylene terephthalate (PET) or polybutylene terephthalate (PBT)), a thermoplastic elastomer (such as poly(styrene-block-butadiene-block-styrene) (SBS) or a poly(styrene-block-ethylene-co-butylene-block-styrene) (SEBS)) containing a self-healing matrix.

5. A self-repairing cable 29, 32, 35 according to claim 1, wherein the hydrophilic additive comprises:
- one or more hydrophilic side chains grafted onto the thermoplastic elastomer by covalent bonds, and the one or more hydrophilic side chains comprise poly(acrylic acid), maleic acid or sodium polyacrylate; or
- a second polymer, wherein the second polymer is a water swellable polymer which is not bonded to the thermoplastic elastomer and comprises poly(acrylic acid) or sodium poly(acrylic acid).

6. A self-repairing cable 29, 32, 35 according to claim 1, wherein the water swelling rubber comprises a rubber matrix and a hydrophilic additive, wherein the rubber matrix comprises a natural rubber and the hydrophilic additive comprises one or more hydrophilic side chains grafted onto the rubber, and the one or more hydrophilic side chains comprise poly(acrylic acid), maleic acid or sodium polyacrylate.

7. A self-repairing cable 29, 32, 35 according to any preceding claim, wherein the self-healing layer 30 comprises a water-blocking layer, wherein the water-blocking layer is configured to prevent water from passing therethrough, and/or wherein the cable 29, 32, 35 comprises an electrical power cable, a power transmission or distribution cable, a coaxial single core cable, a triple or multi-core cable, a data communications cable or an optical fibre cable, and/or wherein the core 2 comprises an electrically conductive material, preferably copper or aluminium, and/or wherein the cable 29, 32, 35 comprises a plurality of cable elements each comprising a conductive core 2, and an outer casing 11 surrounding the cable elements, and the cable preferably comprises at least one filler 16 and/or at least one optical fibre element 14, which are also surrounded by the outer casing, and/or wherein the cable 29, 32, 35 comprises an insulating layer 4 configured to electrically insulate the core 2.

8. A self-repairing cable according to any preceding claim, wherein the cable comprises one or more semi-conductive layers 3, 5 which comprise a semi-conductive material, preferably a carbon-loaded polyethylene, an ethylene copolymer (such as ethylene vinyl acetate (EVA) and ethylene butyl acrylate (EBA)), a carbon loaded thermoplastic elastomer (TPE) and/or a carbon loaded supramolecular matrix, preferably wherein the cable comprises a first self-healing layer 30 disposed adjacent to and surrounding the semi-conductive layer 3,5, wherein the first self-healing layer is semi-conductive, more preferably wherein the first self-healing layer 30 comprises a water swelling thermoplastic elastomer (TPE) compounded with a conductive material such as fumed carbon, colloidal carbon, graphite or graphene.

9. A self-repairing cable 29, 32, 35 according to any preceding claim, wherein the cable 29, 32, 35 comprises:
- a sheath 7, 8 which is configured to not allow water to pass therethrough, the sheath 7, 8 being disposed adjacent to and surrounding the solid self-healing layer 30, preferably wherein the sheath 7, 8 comprises inner and outer sheath layers 7, 8, wherein the inner sheath layer 7 is disposed adjacent to and surrounded by the outer sheath 8, and preferably wherein the outer sheath 8 comprises medium or high density polyethylene (MDPE or HDPE), polypropylene (PP) and/or poly(oxymethylene) and the inner sheath 7 comprises lead or aluminium; and/or
- an additional layer 10 which comprises a plurality of wires, preferably wherein the wires comprise steel wires filled with bitumen, preferably wherein the cable comprises a bedding layer 9, which is configured to hold the additional layer 10 in place and preferably comprises polyvinyl chloride (PVC), an ethylene copolymer, a thermoplastic polyester and/or a thermoplastic elastomer (TPE); and/or
- an external jacket layer 11, preferably comprising a water permeable yarn cladding; and/or
- a second self-healing layer 31, 33; and/or
- a metallic screen 17, 18 configured to provide a conducting earth plane or a reference voltage plane to support electrical measurements of the cable and/or an electrical protection function, and preferably wherein the metallic screen 17, 18 comprises a copper counter helix braid layer 17 and/or a copper counter screen 18; and/or
- a cellular foam layer 34, preferably comprising a thermoplastic elastomer (TPE); and/or
- an outer self-healing layer 31; and/or
- a dye configured to aid the detection of a defect, preferably wherein the dye comprises fluorescein and/or CI Solvent Yellow.

10. A single core electrical cable 29 comprising a conductive core 2 which is disposed adjacent to and surrounded by a first semi-conductive layer 3, an insulating layer 4 which is disposed adjacent to and surrounds the first semi-conductive layer 3, a second semi-conductive layer 5 which is disposed adjacent to and surrounds the insulating layer 4, a first self-healing layer 30 which is disposed adjacent to and surrounds the second semi-conductive layer 5, a sheath 7, 8 which is disposed adjacent to and surrounds the first self-healing layer 30, a bedding layer 9 which is disposed adjacent to and surrounds the sheath 7, 8, an additional layer 10 which is disposed adjacent to and surrounds the bedding layer 9, a second self-healing layer 31 which is disposed adjacent to and surrounds the additional layer 10, and an external jacket layer 11 which is disposed adjacent to and surrounds the second self-healing layer 31, **characterised in that** at least one of the first self-healing layer 30 and second self-healing layer 31 comprises a water-swelling material, wherein the water swelling material comprises:
- a water swelling thermoplastic elastomer (TPE) comprising poly(styrene-block-butadiene-block-styrene) or poly(styrene-block-ethene-co-butane-block-styrene) or poly(styrene-block-ethylene-co-butylene-block-styrene), and a hydrophilic additive; or
- a water swelling rubber.

11. A triple core electrical cable 32 comprising a plurality of cable elements 13, at least one filler 16 and at least one optical fibre element 14, and an outer casing surrounding the cable elements 13, at least one filler 16 and at least one optical fibre element 14, wherein each cable element 13 comprises a conductive core 2, an inner semi-conductive layer 3 which is disposed adjacent to and surrounds the conductive core 2, an insulating layer 4 which is disposed adjacent to and surrounds the inner semi-conductive layer 3, an outer semi-conductive layer 5 which is disposed adjacent to and surrounds the insulating layer 4, a first self-healing layer 30 which is disposed adjacent to and surrounds the outer semi-conductive layer 5, a metallic screen 17, 18 which is disposed adjacent to and surrounds the first self-healing layer 30, a second self-healing layer 33 which is disposed adjacent to and surrounds the metallic screen 17, 18, and a sheath 20, 8 which is disposed adjacent to and surrounds the second self-healing layer 33, and the outer casing comprises a bedding layer 9, an additional layer 10 which is disposed adjacent to and surrounds the bedding layer 9, a cellular foam layer 34 which is disposed adjacent to and surrounds the additional layer 10 and an external jacket layer 11 which is disposed adjacent to and surrounds the cellular foam layer 34, **characterised in that** at least one of the first self-healing layer 30 and second self-healing layer 33 comprises a water-swelling material, wherein the water swelling material comprises:
- a water swelling thermoplastic elastomer (TPE) comprising poly(styrene-block-butadiene-block-styrene) or poly(styrene-block-ethene-co-butane-block-styrene) or poly(styrene-block-ethylene-co-butylene-block-styrene), and a hydrophilic additive; or
- a water swelling rubber.

12. A triple core electrical cable 35 comprising a plurality of cable elements 13, at least one filler 16 and at least one optical fibre element 14, and an outer casing surrounding the cable elements 13, at least one filler 16 and at least one optical fibre element 14, wherein each cable element 13 comprises a conductive core 2, an inner semi-conductive layer 3 which is disposed adjacent to and surrounds the conductive core 2, an insulating layer 4 which is disposed adjacent to and surrounds the inner semi-conductive layer 3, an outer semi-conductive layer 5 which is disposed adjacent to and surrounds the insulating layer 4, a first self-healing layer 30 which is disposed adjacent to and surrounds the outer semi-conductive layer 5, a metallic screen 17, 18 which is disposed adjacent to and surrounds the first self-healing layer 30, a second self-healing layer 33 which is disposed adjacent to and surrounds the metallic screen 17, 18, and a sheath 20, 8 which is disposed adjacent to and surrounds the second self-healing layer 33 and the outer casing comprises a bedding layer 9, an additional layer 10 which is disposed adjacent to and surrounds the bedding layer 9, an outer self-healing layer 31 which is disposed adjacent to and surrounds the additional layer 10 and an optional external jacket layer 11 which, when present, is disposed adjacent to and surrounds the outer self-healing layer 31, **characterised in that** at least one of the first self-healing layer 30, second self-healing layer 33 and outer self-healing layer 31 comprises a water-swelling material, wherein the water swelling material comprises:
- a water swelling thermoplastic elastomer (TPE) comprising poly(styrene-block-butadiene-block-styrene) or poly(styrene-block-ethene-co-butane-block-styrene) or poly(styrene-block-ethylene-co-butylene-block-styrene), and a hydrophilic additive; or
- a water swelling rubber.

13. A method for manufacturing a self-repair cable 29, 32, 35, the method comprising extruding self-healing material to form a self-healing layer 30, 31, 33 comprising a water-swelling material around an inner portion of the cable, thereby forming a self-repair cable 29, 32, 35, wherein the water swelling material comprises:
- a water swelling thermoplastic elastomer (TPE) comprising poly(styrene-block-butadiene-block-styrene) or poly(styrene-block-ethene-co-butane-block-styrene) or poly(styrene-block-ethylene-co-butylene-block-styrene), and a hydrophilic additive;
- or a water swelling rubber.

14. A method according to claim 13, wherein the method comprises a pre-wetting step, wherein the pre-wetting step is carried out subsequent to extruding the water swelling material and comprises exposing the outer surface of the extruded water swelling material to a small quantity of water.

15. Use of a cable 29, 32, 35 according to any one of claims 1 to 12 in a substantially wet or dry environment.

## Patentansprüche

1. Selbstheilendes Kabel 29, 32, 35, das einen Kern 2 umfasst, der von einer festen, selbstheilenden Schicht 30, 31, 33 umgeben ist, die ein wasserquellfähiges Material umfasst, **dadurch gekennzeichnet, dass** das wasserquellfähige Material folgendes umfasst:
- ein wasserquellfähiges thermoplastisches Elastomer (TPE), das Polystyrol-Block-Butadien-Styrol, Polystyrol-Block-Ethen-Co-Butan-Block-Styrol oder Polystyrol-Block-Ethylen-Co-Butylen-Block-Styrol und einen hydrophilen Zusatzstoff; oder
- ein wasserquellfähiges Gummi.

2. Selbstheilendes Kabel 29, 32, 35 nach Anspruch 1, wobei die selbstheilende Schicht 30 um den Kern 2 extrudiert ist.

3. Selbstheilendes Kabel 29, 32, 35 nach Anspruch 1 oder 2, wobei die selbstheilende Schicht 30 ferner ein Formgedächtnispolymer (FGP) umfasst, wobei das Formgedächtnispolymer (FGP) einen intelligenten Polymerwerkstoff umfasst, der in die gewünschte Form programmiert ist, wobei, wenn das FGP verformt ist, die ursprüngliche Form wiederhergestellt wird, sobald das Formgedächtnispolymer einem Stimulus ausgesetzt wird, wie etwa einer spezifischen Temperatur oder einem bestimmten Temperaturbereich, einem elektrischen Feld, Licht und/oder Wasser, wobei das Formgedächtnispolymer bevorzugt folgendes umfasst: ein thermoplastisches Polyurethan, einen kovalent vernetzten Duroplast, wie etwa mit Polycaprolacton funktionalisiertes Polynorbornen und Cyanogruppe, ein kovalent vernetztes, halbkristallines Netzwerk, wie etwa ein Polymernetzwerk, das Polyoctadecylvinyletherco-BA enthält, ein physisch vernetztes Copolymer, wie etwa Ethylenoxid-Ethylenterephthalat-Segment-Copolymer, oder ein physisch vernetztes, halbkristallines Block-Copolymer, wie etwa Polyurethan-Block-Copolymere mit Formgedächtniseffekt.

4. Selbstheilendes Kabel 29, 32, 35 nach einem der vorstehenden Ansprüche, wobei die selbstheilende Schicht 30 ferner eine supramolekulare Matrix umfasst, wobei vorzugsweise
- die supramolekulare Matrix darin eine Mehrzahl von Partikeln inkorporiert, wobei die Partikel das wasserquellfähige Material umfassen; oder
- die selbstheilende Schicht erste und zweite Teilschichten umfasst, wobei die erste Teilschicht das wasserquellfähige Material umfasst, und wobei die zweite Teilschicht die supramolekulare Matrix umfasst, und wobei die erste Teilschicht näher an dem Kern liegt als die zweite Teilschicht, und wobei die erste Teilschicht von der zweiten Teilschicht umgeben ist; oder
- die supramolekulare Matrix Moleküle umfasst, die labile Bindungen bilden können, zum Beispiel wenigstens eines von Wasserstoffbindungen, π-π-Stapel-Wechselwirkung oder ionischen Bindungen, wobei die Moleküle vorzugsweise folgendes umfassen: ein Polyolefin (wie etwa Polyethylen (PE), Polypropropylen (PP), ein Ethylen-Copolymer, eine Olefin-Polymer-Mischung), ein Polyimid, ein Polyamid, ein Polyester (wie etwa Polyethylenterephthalat (PET) oder Polybutylenterephthalat (PBT), ein thermoplastisches Elastomer (wie etwa Polystyrol-Block-Butadien-Block-Styrol) (SBS) oder ein Polystyrol-Block-Ethylen-Co-Butylen-Block-Styrol) (SEBS)), das eine selbstheilende Matrix enthält.

5. Selbstheilendes Kabel 29, 32, 35 nach Anspruch 1, wobei der hydrophile Zusatzstoff folgendes umfasst:
- eine oder mehrere hydrophile Seitenketten, die durch kovalente Bindungen auf das thermoplastische Elastomer gepfropft sind, und wobei die eine oder mehreren hydrophilen Seitenketten Polyacrylsäure, Maleinsäure oder Natriumpolyacrylat umfassen; oder
- ein zweites Polymer, wobei das zweite Polymer ein wasserquellfähiges Polymer ist, das nicht mit dem thermoplastischen Elastomer verbunden ist und Polyacrylsäure oder Natriumpolyacrylsäure umfasst.

6. Selbstheilendes Kabel 29, 32, 35 nach Anspruch 1, wobei das wasserquellfähige Gummi eine Gummimatrix und einen hydrophilen Zusatzstoff umfasst, wobei die Gummimatrix einen Naturkautschuk umfasst, und wobei der hydrophile Zusatzstoff eine oder mehrere hydrophile Seitenketten umfasst, die auf das Gummi gepfropft sind, und wobei die eine oder die mehreren hydrophilen Seitenketten Polyacrylsäure, Maleinsäure oder Natriumpolyacrylat umfassen.

7. Selbstheilendes Kabel 29, 32, 35 nach einem der vorstehenden Ansprüche, wobei die selbstheilende Schicht 30 eine Wasser blockierende Schicht umfasst, wobei die Wasser blockierende Schicht so gestaltet ist, dass sie es verhindert, dass Wasser dort hindurch tritt, und/oder wobei das Kabel 29, 32, 35 ein elektrisches Stromkabel, ein Stromübertragungs- oder Starkstromverteilerkabel, ein koaxiales Einleiterkabel, ein dreiadriges oder mehradriges Kabel, ein Datenkabel oder ein Glasfaserkabel umfasst, und/oder wobei der Kern 2 ein elektrisch leitfähiges Material umfasst, vorzugsweise Kupfer oder Aluminium, und/oder wobei das Kabel 29, 32, 35 mehrere Kabelelemente umfasst, die jeweils einen leitfähigen Kern 2 umfassen, und mit einer äußeren Ummantelung 11, welche die Kabelelemente umgibt, und wobei das Kabel vorzugsweise mindestens ein Füllmaterial 16 und/oder mindestens ein Glasfaserelement 14 umfasst, die ebenfalls von der äußeren Ummantelung umgeben sind, und/oder wobei das Kabel 29, 32, 35 eine isolierende Schicht 4 umfasst, die so gestaltet ist, dass sie den Kern 2 elektrisch isoliert.

8. Selbstheilendes Kabel nach einem der vorstehenden Ansprüche, wobei das Kabel eine oder mehrere halbleitfähige Schichten 3, 5 umfasst, die ein halbleitfähiges Material umfassen, vorzugsweise ein mit Kohlenstoff versetztes Polyethylen, ein Ethylen-Copolymer (wie etwa Ethylenvinylacetat (EVA) und Ethylenbutylacrylat (EBA)), ein mit Kohlenstoff versetztes thermoplastisches Elastomer (TPE) und/oder eine mit Kohlenstoff versetzte supramolekulare Matrix, wobei das Kabel vorzugsweise eine erste selbstheilende Schicht 30 umfasst, die angrenzend an die halbleitfähige Schicht 3, 5 angeordnet ist und diese umgibt, wobei die erste selbstheilende Schicht halbleitfähig ist, wobei die erste selbstheilende Schicht 30 vorzugsweise ein wasserquellfähiges thermoplastisches Elastomer (TPE) umfasst, vermischt mit einem leitfähigen Material, wie etwa Kohlenstoffstaub, fein verteilter Kohlenstoff, Graphit oder Graphen.

9. Selbstheilendes Kabel 29, 32, 35 nach einem der vorstehenden Ansprüche, wobei das Kabel 29, 32, 35 folgendes umfasst:
- einen Mantel 7, 8, der so gestaltet ist, dass er es nicht zulässt, dass Wasser dort hindurch tritt, wobei der Mantel 7, 8 angrenzend an die feste selbstheilende Schicht 30 angeordnet ist und diese umgibt, wobei der Mantel 7, 8 vorzugsweise innere und äußere Mantelschichten 7, 8 umfasst, wobei die innere Mantelschicht 7 angrenzend an den äußeren Mantel 8 angeordnet ist und von dieser umgeben ist, und wobei der äußere Mantel 8 vorzugsweise Polyethylen mit mittlerer oder hoher Dichte (MDPE oder HDPE), Polypropylen (PP) und/oder Polyoxymethylen umfasst, und wobei der innere Mantel 7 Blei oder Aluminium umfasst; und/oder
- eine zusätzliche Schicht 10, die mehrere Drähte umfasst, wobei die Drähte vorzugsweise mit Bitumen gefüllte Stahldrähte umfassen, wobei das Kabel vorzugsweise eine Einbettungsschicht 9 umfasst, die so gestaltet ist, dass sie die zusätzliche Schicht 10 an der Verwendungsposition hält, und wobei sie vorzugsweise Polyvinylchlorid (PVC), ein Ethylen-Copolymer, einen thermoplastischen Polyester und/oder ein thermoplastisches Elastomer (TPE) umfasst; und/oder
- eine äußere Ummantelungsschicht 11, die vorzugsweise einen wasserdurchlässigen Garnüberzug umfasst; und/oder
- eine zweite selbstheilende Schicht 31, 33; und/oder
- einen Metallschirm 17, 18, der so gestaltet ist, dass er eine leitende Erdebene oder eine Referenzspannungsebene bereitstellt, um elektrische Messungen des Kabels und/oder einer elektrischen Schutzfunktion zu ermöglichen, und wobei der Metallschirm 17, 18 vorzugsweise eine Kupfergegenwendel-Umflechtungsschicht 17 und/oder einen Kupfergegenschirm 18 umfasst; und/oder
- eine Zellschaumstoffschicht 34, die vorzugsweise ein thermoplastisches Elastomer (TPE) umfasst; und/oder
- eine äußere selbstheilende Schicht 31; und/oder
- einen Farbstoff, der so gestaltet ist, dass er die Erkennung eines Fehlers unterstützt, wobei der Farbstoff Fluoreszein und/oder CI Solvent Yellow umfasst.

10. Elektrisches Einleiterkabel 29, das einen leitfähigen Kern 2 umfasst, der angrenzend an eine erste halbleitfähige Schicht 3 angeordnet und von dieser umgeben ist, eine isolierende Schicht 4, die angrenzend an die erste halbleitfähige Schicht 3 angeordnet ist und diese umgibt, eine zweite halbleitfähige Schicht 5, die angrenzend an die isolierende Schicht 4 angeordnet ist und diese umgibt, eine erste selbstheilende Schicht 30, die angrenzend an die zweite halbleitfähige Schicht 5 angeordnet ist und diese umgibt, einen Mantel 7, 8, der angrenzend an die erste selbstheilende Schicht 30 angeordnet ist und diese umgibt, eine Einbettungsschicht 9, die angrenzend an den Mantel 7, 8 angeordnet ist und diesen umgibt, eine zusätzliche Schicht 10, die angrenzend an die Einbettungsschicht 9 angeordnet ist und diese umgibt, eine zweite selbstheilende Schicht 31, die angrenzend an die zusätzliche Schicht 10 angeordnet ist und diese umgibt, und eine äußere Ummantelungsschicht 11, die angrenzend an die zweite selbstheilende Schicht 31 angeordnet ist und diese umgibt, **dadurch gekennzeichnet, dass** wenigstens die erste selbstheilende Schicht 30 oder die zweite selbstheilende Schicht 31 ein wasserquellfähiges Material umfasst, wobei das wasserquellfähige Material folgendes umfasst:
- ein wasserquellfähiges thermoplastisches Elastomer (TPE), das Polystyrol-Block-Butadien-Styrol, Polystyrol-Block-Ethen-Co-Butan-Block-Styrol oder Polystyrol-Block-Ethylen-Co-Butylen-Block-Styrol und einen hydrophilen Zusatzstoff; oder
- ein wasserquellfähiges Gummi.

11. Dreiadriges elektrisches Kabel 32, das mehrere Kabelelemente 13 umfasst, mindestens ein Füllmaterial 16 und mindestens ein Glasfaserelement 14 sowie eine äußere Ummantelung, welche die Kabelelemente 13, mindestens ein Füllmaterial 16 und mindestens ein Glasfaserelement 14 umgibt, wobei jedes Kabelelement 13 einen leitfähigen Kern 2 umfasst, eine innere halbleitfähige Schicht 3, die angrenzend an den leitfähigen Kern 2 angeordnet ist und diesen umgibt, eine isolierende Schicht 4, die angrenzend an die innere halbleitfähige Schicht 3 angeordnet ist und diese umgibt, eine äußere halbleitfähige Schicht 5, die angrenzend an die isolierende Schicht 4 angeordnet ist und diese umgibt, eine erste selbstheilende Schicht 30, die angrenzend an die äußeren halbleitfähige Schicht 5 angeordnet ist und diese umgibt, einen Metallschirm 17, 18, der angrenzend an die erste selbstheilende Schicht 30 angeordnet ist und diese umgibt, eine zweite selbstheilende Schicht 33, die angrenzend an den Metallschirm 17, 18 angeordnet ist und diesen umgibt, und einen Mantel 20, 8, der angrenzend an die zweite selbstheilende Schicht 33 angeordnet ist und diese umgibt, und wobei die äußere Ummantelung eine Einbettungsschicht 9 umfasst, eine zusätzliche Schicht 10, die angrenzend an die Einbettungsschicht 9 angeordnet ist und diese umgibt, eine Zellschaumstoffschicht 34, die angrenzend an die zusätzliche Schicht 10 angeordnet ist und diese umgibt, und eine äußere Ummantelungsschicht 11, die angrenzend an die Zellschaumstoffschicht 34 angeordnet ist und diese umgibt, **dadurch gekennzeichnet, dass** wenigstens die erste selbstheilende Schicht 30 oder die zweite selbstheilende Schicht 33 ein wasserquellfähiges Material umfasst, wobei das wasserquellfähige Material folgendes umfasst:
- ein wasserquellfähiges thermoplastisches Elastomer (TPE), das Polystyrol-Block-Butadien-Styrol, Polystyrol-Block-Ethen-Co-Butan-Block-Styrol oder Polystyrol-Block-Ethylen-Co-Butylen-Block-Styrol und einen hydrophilen Zusatzstoff; oder
- ein wasserquellfähiges Gummi.

12. Dreiadriges elektrisches Kabel 35, das mehrere Kabelelemente 13 umfasst, mindestens ein Füllmaterial 16 und mindestens ein Glasfaserelement 14 sowie eine äußere Ummantelung, welche die Kabelelemente 13, mindestens ein Füllmaterial 16 und mindestens ein Glasfaserelement 14 umgibt, wobei jedes Kabelelement 13 einen leitfähigen Kern 2 umfasst, eine innere halbleitfähige Schicht 3, die angrenzend an den leitfähigen Kern 2 angeordnet ist und diesen umgibt, eine isolierende Schicht 4, die angrenzend an die innere halbleitfähige Schicht 3 angeordnet ist und diese umgibt, eine äußere halbleitfähige Schicht 5, die angrenzend an die isolierende Schicht 4 angeordnet ist und diese umgibt, eine erste selbstheilende Schicht 30, die angrenzend an die äußeren halbleitfähige Schicht 5 angeordnet ist und diese umgibt, einen Metallschirm 17, 18, der angrenzend an die erste selbstheilende Schicht 30 angeordnet ist und diese umgibt, eine zweite selbstheilende Schicht 33, die angrenzend an den Metallschirm 17, 18 angeordnet ist und diesen umgibt, und einen Mantel 20, 8, der angrenzend an die zweite selbstheilende Schicht 33 angeordnet ist und diese umgibt, und wobei die äußere Ummantelung eine Einbettungsschicht 9 umfasst, eine zusätzliche Schicht 10, die angrenzend an die Einbettungsschicht 9 angeordnet ist und diese umgibt, eine äußere selbstheilende Schicht 31, die angrenzend an die zusätzliche Schicht 10 angeordnet ist und diese umgibt, und eine optionale äußere Ummantelungsschicht 11, die, sofern sie vorhanden ist, angrenzend an die äußere selbstheilende Schicht 31 angeordnet ist und diese umgibt, **dadurch gekennzeichnet, dass** wenigstens die erste selbstheilende Schicht 30, die zweite selbstheilende Schicht 33 oder die äußere selbstheilende Schicht 31 ein wasserquellfähiges Material umfasst, wobei das wasserquellfähige Material folgendes umfasst:
- ein wasserquellfähiges thermoplastisches Elastomer (TPE), das Polystyrol-Block-Butadien-Styrol, Polystyrol-Block-Ethen-Co-Butan-Block-Styrol oder Polystyrol-Block-Ethylen-Co-Butylen-Block-Styrol und einen hydrophilen Zusatzstoff; oder
- ein wasserquellfähiges Gummi.

13. Verfahren zur Herstellung eines selbstheilenden Kabels 29, 32, 35, wobei das Verfahren folgendes umfasst: Extrudieren von selbstheilendem Material, um eine selbstheilende Schicht 30, 31, 33 zu bilden, die ein wasserquellfähiges Material um einen inneren Teil des Kabels umfasst, wodurch ein selbstheilendes Kabel 29, 32, 35 gebildet wird, wobei das wasserquellfähige Material folgendes umfasst:
- ein wasserquellfähiges thermoplastisches Elastomer (TPE), das Polystyrol-Block-Butadien-Styrol, Polystyrol-Block-Ethen-Co-Butan-Block-Styrol oder Polystyrol-Block-Ethylen-Co-Butylen-Block-Styrol und einen hydrophilen Zusatzstoff; oder
- ein wasserquellfähiges Gummi.

14. Verfahren nach Anspruch 13, wobei das Verfahren einen Vorbenetzungsschritt umfasst, wobei der Vorbenetzungsschritt nach dem Extrudieren des wasserquellfähigen Materials ausgeführt wird und es umfasst, dass die äußere Oberfläche des extrudierten wasserquellfähigen Materials einer geringen Wassermenge ausgesetzt wird.

15. Verwendung eines Kabels 29, 32, 35 nach einem der Ansprüche 1 bis 12 in einer im Wesentlichen feuchten oder trockenen Umgebung.

## Revendications

1. Câble autoréparant 29, 32, 35 comprenant une âme 2 entourée d'une couche auto-régénérante solide 30, 31, 33 comprenant un matériau gonflant à l'eau, **caractérisé en ce que** le matériau gonflant à l'eau comprend :
- un élastomère thermoplastique gonflant à l'eau (TPE) comprenant du poly(styrène-bloc-butadiène-bloc-styrène), du poly(styrène-bloc-ethène-co-butane-bloc-styrène) ou du poly(styrène-bloc-éthylène-co-butylène-bloc-styrène), et un additif hydrophile ;ou
- un caoutchouc gonflant à l'eau.

2. Câble autoréparant 29, 32, 35 selon la revendication 1, dans lequel la couche auto-régénérante 30 est extrudée autour de l'âme 2.

3. Câble autoréparant 29, 32, 35 selon l'une quelconque des revendications 1 ou 2, dans lequel la couche auto-régénérante 30 comprend en outre un polymère à mémoire de forme (SMP), de préférence dans lequel le polymère à mémoire de forme (SMP) comprend un matériau polymère intelligent programmé dans la forme souhaitée, dans lequel si le SMP est déformé alors la forme originale est récupérée une fois que le polymère à mémoire de forme est exposé à un déclencheur, telle qu'une température ou une plage de températures spécifique, un champ électrique, de la lumière et/ou de l'eau, plus préférablement dans lequel le polymère à mémoire de forme comprend un polyuréthane thermoplastique, un matériau thermodurci réticulé de manière covalente, tel que le polynorbornène fonctionnalisé avec de la poly-caprolactone et un groupe cyano, un réseau semi-cristallin réticulé de manière covalente, tel qu'un réseau de polymères contenant du poly(octadécyl vinyl éther)-co-BA, un copolymère réticulé de manière physique, tel qu'un copolymère segmenté d'oxyde d'éthylène-téréphtalate d'éthylène, ou un copolymère séquencé semi cristallin réticulé de manière physique, tels que des copolymères séquencés de polyuréthane avec effet à mémoire de forme.

4. Câble autoréparant 29, 32, 35 selon l'une quelconque des revendications précédentes, dans lequel la couche auto-régénérante 30 comprend en outre une matrice supramoléculaire, de préférence dans lequel
- la matrice supramoléculaire incorpore une pluralité de particules dans celle-ci, dans lequel les particules comprennent le matériau gonflant à l'eau ; ou
- la couche auto-régénérante comprend des première et seconde sous-couches, dans lequel la première sous-couche comprend le matériau gonflant à l'eau et la seconde sous-couche comprend la matrice supramoléculaire et la première sous-couche est plus proche de l'âme que la seconde sous-couche, et la première sous-couche est entourée de la seconde sous-couche ; ou
- la matrice supramoléculaire comprend des molécules capables de former des liaisons labiles, par exemple au moins une liaison parmi les liaisons hydrogène, l'empilement π, ou les liaisons ioniques, de préférence dans lequel les molécules comprennent une polyoléfine (tel que le polyéthylène (PE), le polypropropylène (PP), un copolymère d'éthylène, un mélange polymère d'oléfines), un polyimide, un polyamide, un polyester (tel que le téréphtalate de polyéthylène (PET) ou le téréphtalate de polybutylène (PBT)), un élastomère thermoplastique (tel que du poly(styrène-bloc-butadiène-bloc-styrène) (SBS) ou du poly(styrène-bloc-éthylène-co-butylène-bloc-styrène) (SEBS)) contenant une matrice auto-régénérante.

5. Câble autoréparant 29, 32, 35 selon la revendication 1, dans lequel l'additif hydrophile comprend :
- au moins une chaîne latérale hydrophile greffée sur l'élastomère thermoplastique par des liaisons covalentes, et l'au moins une chaîne latérale hydrophile comprend du polyacide acrylique, de l'acide maléique ou du polyacrylate de sodium ; ou
- un second polymère dans lequel le second polymère est un polymère pouvant être gonflé à l'eau qui n'est pas lié à l'élastomère thermoplastique et comprend du polyacide acrylique ou du polyacide acrylique de sodium.

6. Câble autoréparant 29, 32, 35 selon la revendication 1, dans lequel le caoutchouc gonflant à l'eau comprend une matrice de caoutchouc et un additif hydrophile, dans lequel la matrice de caoutchouc comprend un caoutchouc naturel et l'additif hydrophile comprend au moins une chaîne latérale hydrophile greffée sur le caoutchouc, et l'au moins une chaîne latérale hydrophile comprend du polyacide acrylique, de l'acide maléique ou du polyacrylate de sodium.

7. Câble autoréparant 29, 32, 35 selon l'une quelconque des revendications précédentes, dans lequel la couche auto-régénérante 30 comprend une couche étanche à l'eau, dans lequel la couche étanche à l'eau est conçue pour empêcher l'eau de passer à travers celle-ci, et/ou dans lequel le câble 29, 32, 35 comprend un câble de puissance électrique, un câble de transmission ou de distribution d'énergie, un câble unipolaire coaxial, un câble tripolaire ou multipolaire, un câble de communication de données ou un câble de fibre optique, et/ou dans lequel l'âme 2 comprend un matériau électriquement conducteur, de préférence du cuivre ou de l'aluminium, et/ou dans lequel le câble 29, 32, 35 comprend une pluralité d'éléments de câbles comprenant chacun une âme conductrice 2, et un boîtier externe 11 entourant les éléments de câble, et le câble comprend de préférence au moins une charge 16 et/ou au moins un élément de fibre optique 14, qui sont également entourés par le boîtier externe, et/ou dans lequel le câble 29, 32, 35 comprend une couche isolante 4 conçue pour isoler électriquement l'âme 2.

8. Câble autoréparant selon l'une quelconque des revendications précédentes, dans lequel le câble comprend au moins une couche semi-conductrice 3, 5 qui comprend un matériau semi-conducteur, de préférence un polyéthylène chargé de carbone, un copolymère d'éthylène (tel que l'éthylène-acétate de vinyle (EVA) et l'éthylène-acrylate de butyle (EBA)), un élastomère thermoplastique chargé de carbone (TPE) et/ou une matrice supramoléculaire chargée de carbone, de préférence dans lequel le câble comprend une première couche auto-régénérante 30 disposée de manière adjacente et entourant la couche semi-conductrice 3, 5, dans lequel la première couche auto-régénérante est semi-conductrice, plus préférablement dans lequel la première couche auto-régénérante 30 comprend un élastomère thermoplastique gonflant à l'eau (TPE) composé d'un matériau conducteur tel que le carbone pyrogéné, le carbone colloïdal, le graphite ou le graphène.

9. Câble autoréparant 29, 32,35 selon l'une quelconque des revendications précédentes, dans lequel le câble 29, 32, 35 comprend :
- une gaine 7, 8 qui est conçue pour ne pas permettre à de l'eau de passer à travers celle-ci, la gaine 7, 8 étant disposée de manière adjacente et entourant la couche auto-régénérante solide 30, de préférence dans lequel la gaine 7, 8 comprend des couches de gaine intérieure et extérieure 7, 8, dans lequel la couche de gaine intérieure 7 est disposée de manière adjacente et est entourée par la gaine extérieure 8, et de préférence dans lequel la gaine extérieure 8 comprend du polyéthylène à densité moyenne ou élevée (MDPE ou HDPE), du polypropylène (PP) et/ou du poly(oxyméthylène) et la gaine intérieure 7 comprend du plomb ou de l'aluminium ; et/ou
- une couche supplémentaire 10 qui comprend une pluralité de fils, de préférence dans lequel les fils comprennent des fils d'acier remplis avec du bitume, de préférence dans lequel le câble comprend une couche d'assise 9, qui est conçue pour maintenir la couche supplémentaire 10 en place et comprend de préférence du chlorure de polyvinyle (PVC), un copolymère d'éthylène, un polyester thermoplastique et/ou un élastomère thermoplastique (TPE) ; et/ou
- une couche de gainage externe 11, de préférence comprenant un revêtement de fil perméable à l'eau ; et/ou
- une seconde couche auto-régénérante 31, 33 ; et/ou
- un écran métallique 17, 18 conçu pour fournir un plan de masse conducteur ou un plan de tension de référence afin de soutenir les mesures électriques du câble et/ou une fonction de protection électrique, et de préférence dans lequel l'écran métallique 17, 18 comprend une couche de tressage à hélice en cuivre à rotation inverse 17 et/ou un contre-écran en cuivre 18 ; et/ou
- une couche de mousse cellulaire 34, de préférence comprenant un élastomère thermoplastique (TPE) ; et/ou
- une couche externe auto-régénérante 31 ; et/ou
- un colorant conçu pour aider à la détection d'un défaut, de préférence dans lequel le colorant comprend de la fluorescéine et/ou un jaune à solvant Cl.

10. Câble électrique unipolaire 29 comprenant une âme conductrice 2 qui est disposée de manière adjacente et entourée d'une première couche semi-conductrice 3, une couche isolante 4 qui est disposée de manière adjacente et entoure la première couche semi-conductrice 3, une seconde couche semi-conductrice 5 qui est disposée de manière adjacente et entoure la couche isolante 4, une première couche auto-régénérante 30 qui est disposée de manière adjacente et entoure la seconde couche semi-conductrice 5, une gaine 7, 8 qui est disposée de manière adjacente et entoure la première couche auto-régénérante 30, une couche d'assise 9 qui est disposée de manière adjacente et entoure la gaine 7, 8, une couche supplémentaire 10 qui est disposée de manière adjacente et entoure la couche d'assise 9, une seconde couche auto-régénérante 31 qui est disposée de manière adjacente et entoure la couche supplémentaire 10, et une couche de gainage externe 11 qui est disposée de manière adjacente et entoure la seconde couche auto-régénérante 31, **caractérisé en ce que** au moins une parmi la première couche auto-régénérante 30 et la seconde couche auto-régénérante 31 comprend un matériau gonflant à l'eau, dans lequel le matériau gonflant à l'eau comprend :
- un élastomère thermoplastique gonflant à l'eau (TPE) comprenant du poly(styrène-bloc-butadiène-bloc-styrène) ou du poly(styrène-bloc-éthène-bloc-co-butane-bloc-styrène) ou du poly(styrène-bloc-éthylène-co-butylène-bloc-styrène), et un additif hydrophile ; ou
- un caoutchouc gonflant à l'eau.

11. Câble électrique tripolaire 32 comprenant une pluralité d'éléments de câble 13, au moins une charge 16 et au moins un élément de fibre optique 14, et un boîtier externe entourant les éléments de câble 13, au moins une charge 16 et au moins un élément de fibre optique 14, dans lequel chaque élément de câble 13 comprend une âme conductrice 2, une couche interne semi-conductrice 3 qui est disposée de manière adjacente et entoure l'âme conductrice 2, une couche isolante 4 qui est disposée de manière adjacente et entoure la couche interne semi-conductrice 3, une couche externe semi-conductrice 5 qui est disposée de manière adjacente et entoure la couche isolante 4, une première couche auto-régénérante 30 qui est disposée de manière adjacente et entoure la couche externe semi-conductrice 5, un écran métallique 17, 18 qui est disposé de manière adjacente et entoure la première couche auto-régénérante 30, une seconde couche auto-régénérante 33 qui est disposée de manière adjacente et entoure l'écran métallique 17, 18, et une gaine 20, 8 qui est disposée de manière adjacente et entoure la seconde couche auto-régénérante 33, et le boîtier externe comprend une couche d'assise 9, une couche supplémentaire 10 qui est disposée de manière adjacente et entoure la couche d'assise 9, une couche de mousse cellulaire 34 qui est disposée de manière adjacente et entoure la couche supplémentaire 10 et une couche de gainage externe 11 qui est disposée de manière adjacente et entoure la couche de mousse cellulaire 34, **caractérisé en ce que** au moins une parmi la première couche auto-régénérante 30 et la seconde couche auto-régénérante 33 comprend un matériau gonflant à l'eau, dans lequel le matériau gonflant à l'eau comprend :
- un élastomère thermoplastique gonflant à l'eau (TPE) comprenant du poly(styrène-bloc-butadiène-bloc-styrène) ou du poly(styrène-bloc-éthène-bloc-co-butane-bloc-styrène) ou du poly(styrène-bloc-éthylène-co-butylène-bloc-styrène), et un additif hydrophile ; ou
- un caoutchouc gonflant à l'eau.

12. Câble électrique tripolaire 35 comprenant une pluralité d'éléments de câble 13, au moins une charge 16 et au moins un élément de fibre optique 14, et un boîtier externe entourant les éléments de câble 13, au moins une charge 16 et au moins un élément de fibre optique 14, dans lequel chaque élément de câble 13 comprend une âme conductrice 2, une couche interne semi-conductrice 3 qui est disposée de manière adjacente et entoure l'âme conductrice 2, une couche isolante 4 qui est disposée de manière adjacente et entoure la couche interne semi-conductrice 3, une couche externe semi-conductrice 5 qui est disposée de manière adjacente et entoure la couche isolante 4, une première couche auto-régénérante 30 qui est disposée de manière adjacente et entoure la couche externe semi-conductrice 5, un écran métallique 17, 18 qui est disposé de manière adjacente et entoure la première couche auto-régénérante 30, une seconde couche auto-régénérante 33 qui est disposée de manière adjacente et entoure l'écran métallique 17, 18, et une gaine 20, 8 qui est disposée de manière adjacente et entoure la seconde couche auto-régénérante 33 et le boîtier externe comprend une couche d'assise 9, une couche supplémentaire 10 qui est disposée de manière adjacente et entoure la couche d'assise 9, une couche externe auto-régénérante 31 qui est disposée de manière adjacente et entoure la couche supplémentaire 10 et une éventuelle couche de gainage externe 11 qui, lorsqu'elle est présente, et disposée de manière adjacente et entoure la couche externe auto-régénérante 31, **caractérisé en ce que** au moins une parmi la première couche auto-régénérante 30, la seconde couche auto-régénérante 33 et la couche externe auto-régénérante 31 comprend un matériau gonflant à l'eau, dans lequel le matériau gonflant à l'eau comprend :
- un élastomère thermoplastique gonflant à l'eau (TPE) comprenant du poly(styrène-bloc-butadiène-bloc-styrène) ou du poly(styrène-bloc-éthène-bloc-co-butane-bloc-styrène) ou du poly(styrène-bloc-éthylène-co-butylène-bloc-styrène), et un additif hydrophile ; ou
- un caoutchouc gonflant à l'eau.

13. Procédé de fabrication d'un câble auto-régénérant 29, 32, 35, le procédé comprenant l'extrusion du matériau auto-régénérant afin de former une couche auto-régénérante 30, 31, 33 comprenant un matériau gonflant à l'eau autour d'une partie interne du câble, formant ainsi un câble auto-régénérant 29, 32, 35, dans lequel le matériau gonflant à l'eau comprend :
- un élastomère thermoplastique gonflant à l'eau (TPE) comprenant du poly(styrène-bloc-butadiène-bloc-styrène) ou du poly(styrène-bloc-éthène-bloc-co-butane-bloc-styrène) ou du poly(styrène-bloc-éthylène-co-butylène-bloc-styrène), et un additif hydrophile ;
- ou un caoutchouc gonflant à l'eau.

14. Procédé selon la revendication 13, dans lequel le procédé comprend une étape de pré-mouillage, dans lequel l'étape de pré-mouillage est effectuée après l'extrusion du matériau gonflant à l'eau et comprend l'exposition de la surface externe du matériau extrudé gonflant à l'eau à une petite quantité d'eau.

15. Utilisation d'un câble 29, 32, 35 selon l'une quelconque des revendications 1 à 12 dans un environnement sensiblement humide ou sec.
